(19) Europäisches Patentamt
European Patent Office
Office européen des brevets

(11) **EP 4 696 579 A1**

(12) **EUROPEAN PATENT APPLICATION**
published in accordance with Art. 153(4) EPC

(43) Date of publication:
**18.02.2026 Bulletin 2026/08**

(21) Application number: **24788518.9**

(22) Date of filing: **18.03.2024**

(51) International Patent Classification (IPC):
**B60W 40/08** *(2012.01)*   **B60R 1/29** *(2022.01)*
**B60W 30/02** *(2012.01)*   **G08G 1/16** *(2006.01)*

(52) Cooperative Patent Classification (CPC):
**B60R 1/29; B60W 30/02; B60W 40/08; G08G 1/16**

(86) International application number:
**PCT/JP2024/010426**

(87) International publication number:
**WO 2024/214488 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 JP 2023066211**

(71) Applicant: **Astemo, Ltd.**
**Chiyoda-ku,**
**Tokyo 1000004 (JP)**

(72) Inventors:
• **MAEDA Kenta**
  **Tokyo 100-8280 (JP)**
• **NIIHARA Tatsuru**
  **Tokyo 100-004 (JP)**
• **OHSHITA Shuji**
  **Tokyo 100-004 (JP)**

(74) Representative: **Strehl & Partner mbB**
**Maximilianstrasse 54**
**80538 München (DE)**

(54) **VEHICLE INTEGRATED CONTROL DEVICE**

(57)    When a travel control is performed to suppress development of motion sickness by controlling a pose of a vehicle, an insufficient travel control for an occupant having a high sensitivity for the motion sickness is prevented even when an acquisition accuracy of a head pose for estimating a head motion of the occupant is bad. A vehicle integrated control device 2 includes: a target value generation section 21 for generating a target value 22 of a motion control of the vehicle; a head pose acquisition section 23 for acquiring the head pose of the occupant; an acquisition state determination section 25 for determining an acquisition state of the head pose; a vehicle motion acquisition section 26 for acquiring vehicle motion information indicating a state of a motion of the vehicle; a head motion estimation section 27 for estimating and outputting the head motion of the occupant based on at least one of the target value 22 and the vehicle motion information and the head pose; and a target value correction section 28 for correcting and outputting the target value 22 to reduce the head motion based on an estimation result of an estimated head motion. The head motion estimation section 27 or the target value correction section 28 corrects an output in response to an acquisition state.

FIG. 3

## Description

Technical Field

This invention relates to a vehicle integrated control device.

Background Art

As a motion sickness estimation system and a vehicle for reducing a possibility of development of the motion sickness, one described in Patent Literature 1 is known. The abstract of Patent Literature 1 describes "a motion sickness estimation system (10) includes an estimation section (312) and an output section (313). The estimation section (312) is configured to perform estimation processing to estimate whether a person is in a situation leading to the motion sickness based on person information indicating a state of the person on the vehicle. The output section (313) outputs a result of the estimation processing in the estimation section (312)." In addition, Claim 14 of Patent Literature 1 describes that "the travel controller controls travel of the vehicle to reduce a load on the person in the prevention processing."

Citation List

Patent Literature

Patent Literature 1: International Publication No. WO 2019/177002

Summary of Invention

Technical Problem

However, the motion sickness estimation method of Patent Literature 1 is on the assumption that "the person information indicating the state of the person on the vehicle" is appropriately acquirable (an acquisition state is good, for example, an acquisition accuracy is high). When the person information is not appropriately acquirable (the acquisition state is bad, for example, the acquisition accuracy is low), an error may occur in estimating "whether the person is in the condition leading to the motion sickness."

For example, when the acquisition state of a head pose is bad in acquiring and using the head pose to estimate the head motion of an occupant, a largeness of the head motion of the occupant is estimated lower compared to when the acquisition state is good. The occupant having a high sensitivity for the motion sickness may be erroneously recognized as having a low sensitivity for the motion sickness. As a result, when a travel control for controlling a pose of the vehicle is performed to suppress development of the motion sickness, the travel control is insufficient, and thus the motion sickness is developed.

An object of the present invention is to provide a vehicle integrated control device in which, in performing a travel control for controlling a pose of the vehicle to suppress development of the motion sickness, even when an acquisition state of the head pose for estimating a head motion of the occupant is bad, an insufficient travel control for the occupant having a high sensitivity for the motion sickness is preventable.

Solution to Problem

For addressing the above problem, a vehicle integrated control device includes: a target value generation section for generating a target value for a motion control of the vehicle; a head pose acquisition section for acquiring the head pose of an occupant; an acquisition state determination section for determining an acquisition state of the head pose; a vehicle motion acquisition section for acquiring vehicle motion information indicating a state of a motion of the vehicle; a head pose estimation section for estimating and outputting a head motion of the occupant based on at least one of the target value and the vehicle motion information and the head pose; and a target value correction section for correcting and outputting the target value to reduce the head motion based on an estimation result of an estimated head motion. The head motion estimation section or the target value correction section corrects the output in response to the acquisition state.

Advantageous Effects of Invention

In accordance with a vehicle integrated control device of the present invention, in performing a travel control for controlling a pose of a vehicle to prevent development of the motion sickness, even when an acquisition state of the head pose for estimating a head motion of an occupant is bad, an insufficient travel control for the occupant having a high sensitivity for the motion sickness is preventable.

Note that a problem, a configuration, and an advantageous effect other than the above described ones become obvious in explanation for Embodiments described below.

Brief Description of Drawings

FIG. 1 shows a plane view of an entire configuration of a vehicle of First Embodiment.
FIG. 2 shows a schematic view of input and output signals of the vehicle integrated control device of First Embodiment.
FIG. 3 shows a functional block diagram of the vehicle integrated control device of First Embodiment.
FIG. 4A shows an explanation view indicating one example of a camera mounted on the vehicle of First Embodiment.

FIG. 4B shows an explanation view indicating one example of the camera mounted on the vehicle of First Embodiment.

FIG. 5A shows an explanation view indicating an example of a behavior of an acquisition state determination section of the vehicle integrated control device of First Embodiment.

FIG. 5B shows an explanation view indicating an example of a behavior of the acquisition state determination section of the vehicle integrated control device of First Embodiment.

FIG. 5C shows an explanation view indicating an example of a behavior of the acquisition state determination section of the vehicle integrated control device of First Embodiment.

FIG. 6A shows an explanation view indicating an example of a behavior of the acquisition state determination section of the vehicle integrated control device of First Embodiment.

FIG. 6B shows an explanation view indicating an example of a behavior of the acquisition state determination section of the vehicle integrated control device of First Embodiment.

FIG. 7A shows an explanation view indicating an example of a behavior of the acquisition state determination section of the vehicle integrated control device of First Embodiment.

FIG. 7B shows an explanation view indicating an example of a behavior of the acquisition state determination section of the vehicle integrated control device of First Embodiment.

FIG. 8A shows an explanation view indicating an example of a behavior of the acquisition state determination section of the vehicle integrated control device of First Embodiment.

FIG. 8B shows an explanation view indicating an example of a behavior of the acquisition state determination section of the vehicle integrated control device of First Embodiment.

FIG. 8C shows an explanation view indicating an example of a behavior of the acquisition state determination section of the vehicle integrated control device of First Embodiment.

FIG. 9 shows an explanation view indicating an example of a behavior of the acquisition state determination section of the vehicle integrated control device of First Embodiment.

FIG. 10A shows an explanation view indicating one example of a head motion estimation method in a head motion estimation section of the vehicle integrated control device of First Embodiment.

FIG. 10B shows an explanation view indicating one example of the head motion estimation method in the head motion estimation section of the vehicle integrated control device of First Embodiment.

FIG. 11 shows an explanation view indicating one example of travel data for coefficient learning of the head motion estimation in the head motion estimation section of the vehicle integrated control device of First Embodiment.

FIG. 12 shows an explanation view indicating one example of a coefficient learning result of the head motion estimation in the head motion estimation section of the vehicle integrated control device of First Embodiment.

FIG. 13 shows an explanation view indicating one example of a travel scene for explaining a behavior of a target value correction section of the vehicle integrated control device of First Embodiment.

FIG. 14 shows an explanation view indicating one example of a behavior of the target value correction section of the vehicle integrated control device of First Embodiment.

FIG. 15 shows an explanation view indicating one example of a behavior of the target value correction section of the vehicle integrated control device of First Embodiment.

FIG. 16 shows an explanation view indicating one example of a behavior of the target value correction section of the vehicle integrated control device of First Embodiment.

FIG. 17 shows an explanation view indicating one example of behavior of actuators for achieving a behavior of the target value correction section of the vehicle integrated control device of First Embodiment.

FIG. 18 shows an explanation view indicating an example of a behavior of the acquisition state determination section of the vehicle integrated control device of Second Embodiment.

FIG. 19 shows a functional block diagram of the vehicle integrated control device of Third Embodiment.

Description of Embodiments

Hereinafter, the embodiments of the present invention are explained using the drawings. The same or similar components in each drawing and each embodiment have the same reference signs, and duplicative explanation is omitted.

First Embodiment

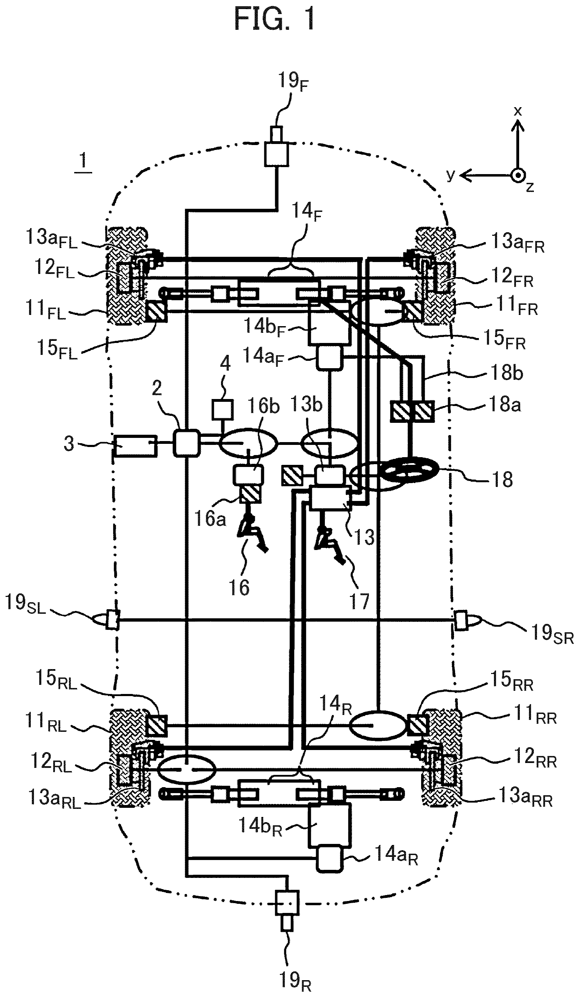

FIG. 1 shows a plane view of an entire configuration of a vehicle of First Embodiment.

A vehicle 1 has a vehicle integrated control device 2, an external controller 3, a combine sensor 4, a wheel 11, a motor 12, a braking mechanism 13 (a wheel cylinder 13a and a brake controller 13b), a steering mechanism 14 (a steering controller 14a and a steering motor 14b), a suspension 15, an accelerator pedal 16, a stroke sensor 16a, an acceleration controller 16b, a brake pedal 17, a steering wheel 18, a steering torque detector 18a, a steering angle detector 18b, and an external sensor 19. The subscripts in the drawing are signs, in which the FL corresponds to the front left, the FR corresponds to the front right, the RL corresponds to the rear left, the RR corresponds to the rear right, the SL corresponds to the left side, and the SR corresponds to the right side. For example, as the wheels 11, the $11_{FL}$, the $11_{FR}$, the $11_{RL}$, and the $11_{RR}$ correspond to the front left wheel, the front right wheel, the rear left wheel, and the rear right wheel, respectively. In addition, the F corresponds to the front, the R corresponds to the rear, and the S corresponds to the side.

Hereinafter, the longitudinal direction of the vehicle 1 is defined as the x axis (the front direction is positive), the lateral direction of the vehicle 1 is defined as the y axis (the left direction is positive), and the vertical direction of the vehicle 1 is defined as the z axis (the upward direction is positive), and then, details of each configuration are sequentially explained.

The vehicle integrated control device 2 is a controller that integrally controls actuators such as the motor 12, the braking mechanism 13, the steering mechanism 14, and the suspension 15 in response to manipulations of a driver, external commands from the external controller 3, and detection signals of the combine sensor 4 (detection signals about control axes of a total of six degrees of freedom, including accelerations in three translation directions (longitudinal, lateral, and vertical) and angular speeds in three rotation directions (roll, pitch, and yaw)). Specifically, this vehicle integrated control device 2 is an ECU (Electronic Control Unit) having an arithmetic unit such as a CPU, a main storage device such as a semiconductor memory, an auxiliary storage device, and hardware such as a communication device. Then, the arithmetic unit executes programs loaded from the auxiliary storage device to the main storage device to achieve each after-mentioned function. The following explanation is made with appropriately omitting explanation of such a known technology.

The external controller 3 is a higher rank controller to execute a driver assistance control and an autonomous driving control via the vehicle integrated control device 2. The external controller 3 calculates a speed command value and an acceleration command value to achieve an adaptive cruise control (ACC) that follows a preceding vehicle or a yaw command value to achieve a lane keep control (LKC) that keeps in-lane driving, and outputs the calculated values to the vehicle integrated control device 2 as external commands based on external information acquired by the external sensor 19 (e.g., a camera, a radar, or an LiDAR). Note that, in FIG. 1, the vehicle integrated control device 2 is separate from the external controller 3. The controllers may both be achieved by a single ECU.

As the external sensor 19, for example, a fisheye camera having a viewing angle of 180 degrees is mounted to the front, the left and right sides, and the rear of the vehicle 1 respectively ($19_F$, $19_{SL}$, $19_{SR}$, and $19_R$).

This enables detection of relative distances and relative speeds to objects such as vehicles, bicycles, pedestrians, and obstacles around the vehicle 1. Note that, in the present embodiment, as one example of the sensor configuration, the combination of the above sensors is described, but this is not limited. The configuration may combine with, e.g., an ultrasonic sensor, a stereo camera, an infrared camera, and a laser radar. A laser radar capable of sensing surroundings around an angle of 360 degrees may be mounted to the ceiling of the vehicle 1. The above sensor signals (signals outputted from the above sensors) are inputted to the vehicle integrated control device 2 or the external controller 3.

A driving system of the vehicle 1 is explained here. The vehicle 1 mounts a torque generation device for applying a driving force to each wheel 11 as a main portion of the driving system. One example of this torque generation device is an engine or a motor for transmitting a driving force to a pair of the left and right wheels 11 via a differential gear and a driving shaft. Another example of the torque generation device is the motor 12 of an in-wheel motor type for driving each wheel 11 independently. Hereinafter, on the premise of the vehicle configuration of FIG. 1, mounting the in-wheel motor type motor 12 to each wheel 11, details of the present embodiment are explained.

When the driver wants to move the vehicle 1 forward (or backward), the driver shifts a shift lever to a desired setting, and then manipulates the accelerator pedal 16. At this time, the stroke sensor 16a detects a depression amount of the accelerator pedal 16. The acceleration controller 16b outputs, to the vehicle integrated control device 2, an acceleration command to which the depression amount is changed. The vehicle integrated control device 2 supplies electrical power from an unshown battery to the motor 12 of each wheel in response to the inputted acceleration command. As a result, the vehicle 1 is capable of accelerating or decelerating in response to the manipulations of the accelerator pedal 16.

In addition, when a driver assistance and an autonomous driving are executed in response to an external command from the external controller 3, the vehicle integrated control device 2 supplies desired electrical power to the motor 12 of each wheel in response to the inputted external command to control each motor torque. As a result, the vehicle 1 accelerates or decelerates to perform the desired driver assistance or autonomous driving.

Next, the braking system of the vehicle 1 is explained. The vehicle 1 mounts, as a main portion of the braking system, the wheel cylinder 13a for applying a braking force to each wheel 11. This wheel cylinder 13a includes, for example, a cylinder, a piston, a pad, and a disk rotor. In this wheel cylinder 13a, a hydraulic fluid supplied from a master cylinder drives the piston, the pad coupled to the piston is pushed by the disk rotor rotating with the wheel 11, and the braking torque acting on the disk rotor is the braking force acting between the wheel 11 and a road surface.

When the driver wants to brake the vehicle 1, the driver manipulates the brake pedal 17. At this time, the pedal force of the driver to step on the brake pedal 17 is increased by a brake booster (unshown), and a hydraulic pressure generally proportional to the pedal force is generated by a master cylinder. The generated hydraulic pressure is supplied to the wheel cylinders $13a_{FL}$, $13a_{FR}$, $13a_{RL}$, and $13a_{RR}$ of the respective wheels via the braking mechanism 13. Thus, in response to the manipulations of the brake pedal by the driver, the piston of the wheel cylinder 13a of each wheel is pressed onto the disk rotor to generate a braking force on each wheel. Note that, in the vehicle 1 mounting the vehicle integrated control device 2, the brake booster and the master cylinder may be omitted. In this case, the brake pedal 17 and the braking mechanism 13 are directly connected to each other. When the driver steps on the brake pedal 17, the braking mechanism 13 may directly function.

In addition, when the driver assistance and the autonomous driving are executed in response to an external command from the external controller 3, the vehicle integrated control device 2 controls the braking mechanism 13 and the wheel cylinder 13a of each wheel via the brake controller 13b in response to the inputted external command. As a result, the vehicle 1 is braked, and the desired driver assistance and autonomous driving are executed. Note that the brake controller 13b also functions to change the manipulation amount of the brake pedal 17 by the driver to a brake command, and to output the brake command to the vehicle integrated control device 2 as the external command.

Next, the steering system of the vehicle 1 is explained. The vehicle 1 mounts, as a main part of the steering system, the steering mechanism 14 for applying a steering force to each wheel 11. FIG. 1 shows a front steering mechanism $14_F$ for steering the front wheels $11_F$ (front left wheel $11_{FL}$, front right wheel $11_{FR}$) and a rear steering mechanism $14_R$ for steering the rear wheels $11_R$ (rear left wheel $11_{RL}$, rear right wheel $11_{RR}$). The steering mechanism 14 is not necessarily installed to both the front and the rear. For example, the rear steering mechanism $14_R$ may be omitted.

When the driver wants to steer the vehicle 1, the driver manipulates the steering wheel 18. At this time, the "steering torque" and the "steering angle" inputted by the driver via the steering wheel 18 are detected by the steering torque detector 18a and the steering angle detector 18b. The steering controller $14a_F$ on the front controls the steering motor $14b_F$ on the front to generate an assist torque for steering the front wheels $11_F$ based on the detected steering torque and steering angle. Similarly, the steering controller $14a_R$ on the rear controls the steering motor $14b_R$ on the rear to generate an assist torque for steering the rear wheels $11_R$ based on the detected steering torque and steering angle.

In addition, when the driver assistance and the autonomous driving are executed in response to the external command from the external controller 3, the vehicle integrated control device 2 controls the steering torque of the steering motor 14b via the steering controller 14a. As a result, the vehicle 1 is steered to execute the desired driver assistance and autonomous driving. In that case, the steering wheel 18 may be omitted.

Next, the suspension system of the vehicle 1 is explained. The vehicle 1 mounts, as a main part of the suspension system, the suspension 15 that absorbs vibrations or shocks generated on each wheel 11 to improve the stability of the vehicle body and the ride comfort. This suspension 15 is, for example, a semi-active suspension combining a dumper having a changeable viscosity and a coil spring or a full active suspension combining an actuator, a dumper, and a coil spring, lengths of which are adjustable, to be capable of arbitrarily changing a relative distance between the vehicle body and the wheel 11.

The vehicle integrated control device 2 controls the viscosity of the semi-active suspension and the length of the full active suspension not only to improve, e.g., the ride comfort but also to appropriately control the pose of the vehicle 1 in response to surroundings.

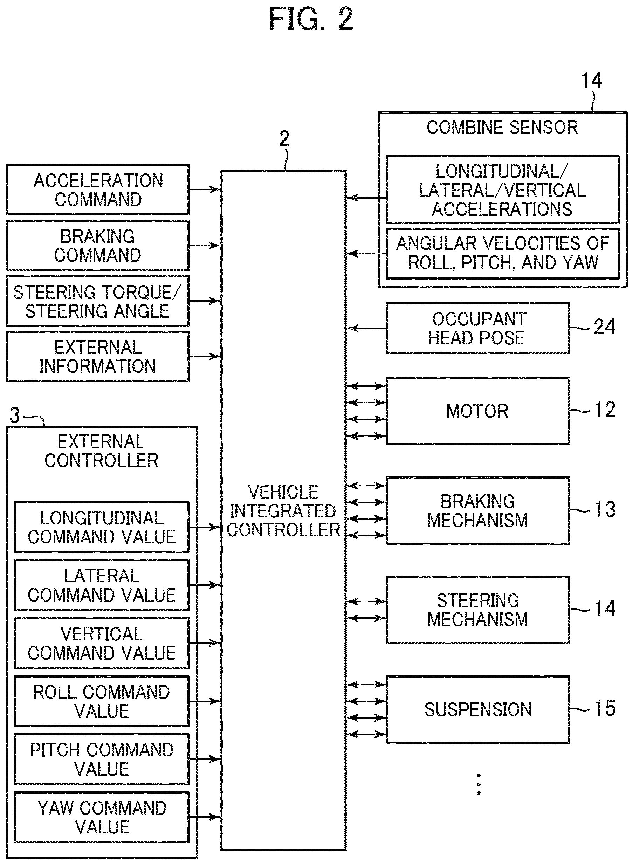

FIG. 2 shows a schematic view of input and output signals of the vehicle integrated control device of First Embodiment. Referring to FIG. 2, inputs and outputs of the vehicle integrated control device 2 are explained.

The acceleration command, the brake command, the steering torque, the steering angle, and so on generated from manipulations of the accelerator pedal 16, the brake pedal 17, the steering wheel 18, and so on by the driver are inputted to the vehicle integrated control device 2 as external commands. External information acquired by the external sensor 19 may be inputted to the vehicle integrated control device 2. In addition, a vehicle motion command value generated by the external controller 3 during the driver assistance control or the autonomous driving control is inputted to the vehicle integrated control device 2. Here, an example in which external commands of up to six degrees of freedom are inputted from among a longitudinal command value, a lateral command value, a vertical command value, a roll command value, a pitch command value, and the yaw command value is shown here. These command values indicate, e.g., a speed, an acceleration, a jerk, an angle, an angular speed, an angular acceleration, and a steering angle. Further, detection values of longitudinal, lateral, and vertical accelerations and angular speeds of roll, pitch, and yaw are inputted from the combine sensor 4 to the vehicle integrated control device 2.

Then, based on the above external commands and detection values, the vehicle integrated control device 2 appropriately allocates each manipulation amount of the motors 12 ($12_{FL}$ to $12_{RR}$), the braking mechanism 13 (wheel cylinders $13a_{FL}$ to $13a_{RR}$), the steering mechanism 14 (steering motors $14b_F$, $14b_R$), and the suspensions 15 ($15_{FL}$ to $15_{RR}$) (hereinafter, the reference signs 12 to 15 may be collectively called actuators) to execute each control of the driving, braking, steering, and suspension and thus to achieve desired vehicle controls including a pose control. Note that, since the vehicle 1 of FIG. 1 responds to manual driving, the external commands from the driver are also shown in FIG. 2. The present invention is also capable of adapting to the vehicle 1 responding to only full autonomous driving or remote manipulations. In that case, the external commands from the driver may be configured to be omitted. During the autonomous driving, up to six degrees of freedom of the external commands may be inputted from the external controller 3, or by use of the external sensor 19 and map information stored in the vehicle integrated control device 2, target values may be generated for autonomous traveling. The present embodiment is explained on the assumption that the target values for the autonomous traveling are generated in the vehicle integrated control device 2.

Note that the information from the actuators (12 to 15) is also inputted to the vehicle integrated control device 2. For example, the information includes position information about the motor 12. In addition, when the information about the jerk is required, the jerk is acquired by time differencing an acceleration. Similarly, when the information about an angular acceleration is required, the angular acceleration is acquired by time differencing an angular speed. In addition, when the information about a speed and an angle is required, estimation is made by calculations based on various pieces of information.

An occupant head pose 24 is further inputted to the vehicle integrated control device 2. The details are described below. A camera is mounted in a cabin of the vehicle 1 to measure a motion of the head of the occupant and to estimate the sensitivity for the motion sickness. Alternatively, information about the motion sickness sensitivity of the occupant on the vehicle may be acquired from a mobile terminal of the occupant as a mechanism.

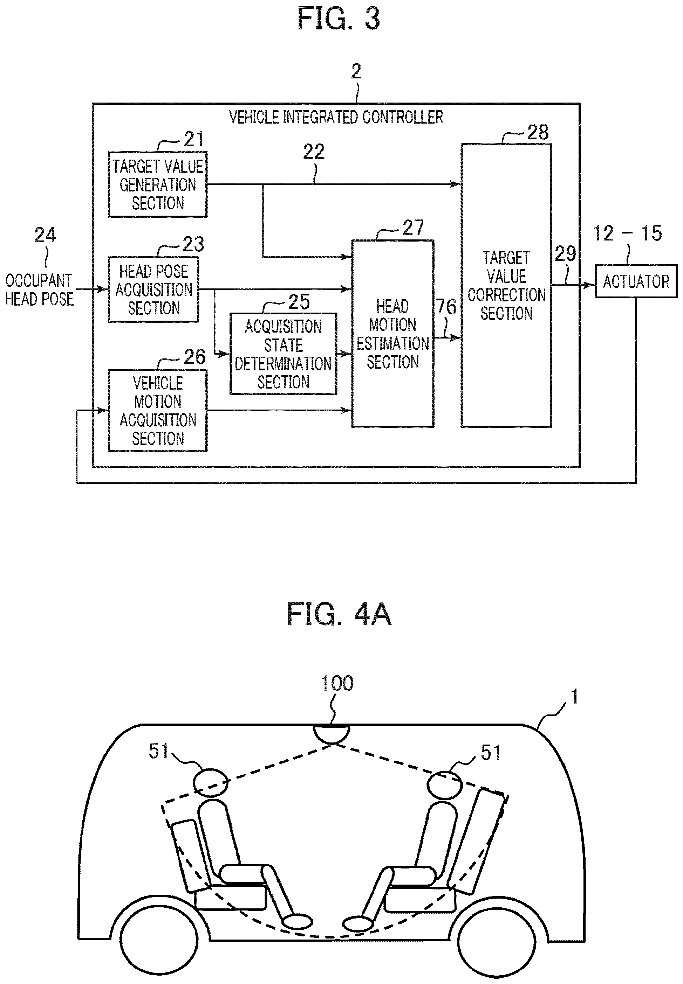

FIG. 3 shows a functional block diagram of the vehicle integrated control device of First Embodiment.

FIG. 2 shows the vehicle integrated control device 2 into which three types of the external commands caused by the driver and up to six types of the external commands from the external controller 3 are inputted. As described above, the present embodiment uses, as an example, the configuration for generating the target values for the autonomous driving in the vehicle integrated control device 2 to explain details of the vehicle integrated control device 2 in the present embodiment.

The vehicle integrated control device 2 in the present embodiment includes a target value generation section 21, a head pose acquisition section 23, an acquisition state determination section 25, a vehicle motion acquisition section 26, a head motion estimation section 27, and a target value correction section 28.

The target value generation section 21 generates a target value 22 for motion control of the vehicle 1. Specifically, the target value generation section 21 sets, as the target value 22, a vehicle motion target for achieving a specific driving task in the autonomous driving (e.g., following a route or traveling at the same speed as a preceding vehicle), and outputs the target value 22 to the target value correction section 28. The target value 22 usually includes three types of a longitudinal acceleration command value, a lateral acceleration command value, and the yaw command value. In addition, a roll angle command value, a pitch angle command value, and the vertical command value are added, and up to six types of the command values are generated. Note that, when three types of the external commands from the driver (the acceleration command, the brake command, and the steering torque/steering angle) are inputted, the target value generation section 21 changes those external commands to the longitudinal acceleration command value, the lateral acceleration command value, and the yaw command value, and outputs the command values as the target values 22.

The head pose acquisition section 23 acquires the head pose of the occupant. Specifically, the head pose acquisition section 23 acquires the occupant head pose 24 through a sensor and input means such as the camera mounted in the cabin of the vehicle 1. The occupant head pose 24 is sensing information about the sensed head of the occupant, such as an image of the camera.

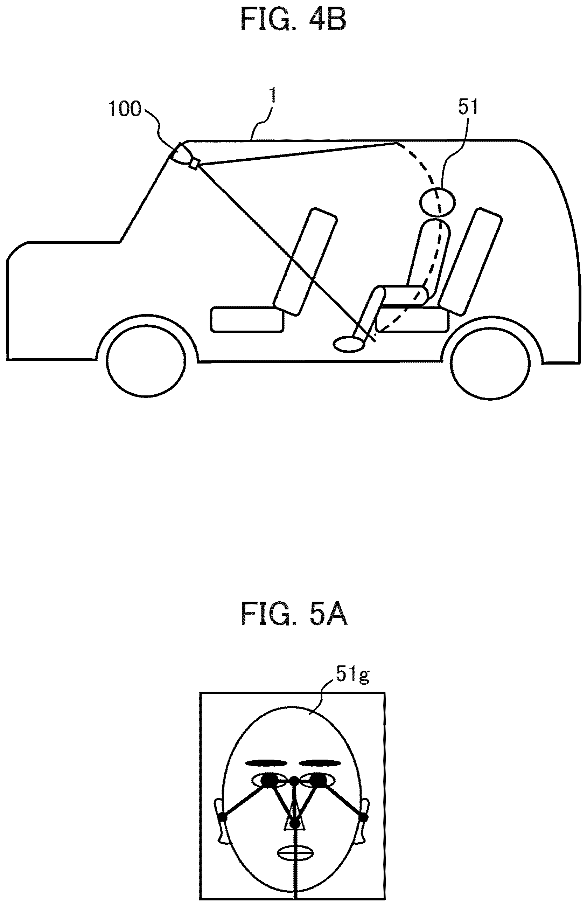

FIGS. 4A and 4B show an explanation view indicating one example of the camera mounted on the vehicle of First Embodiment.

FIG. 4A shows an example of the vehicle 1 having a shape of a public bus capable of autonomous driving. In the present example, a camera 100 attached to the ceiling and having a viewing angle of 360 degrees detects, e.g., poses and head motions of two occupants 51 as the occupant head poses 24. The detected occupant head poses 24 are outputted to the head pose acquisition section 23. Note that the camera 100 is not limited to such a shape/position, may be multiple ones in the cabin, and may not have a viewing angle of 360 degree. In addition, this camera 100 acquires gazes and in-vehicle tasks (such as reading and sleeping) of the occupants 51. These pieces of information may be contained in the occupant head poses 24. Alternatively, based on the occupant head poses 24 from the camera 100, an image analysis etc. is executed, and the head pose acquisition section 23 may analyze and acquire the gazes and in-vehicle tasks (such as reading and sleeping) of the occupants 51.

As shown in FIG. 4B, when the vehicle 1 has a shape of a passenger automobile, the camera 100 may be mounted near the connection point between the front screen and the ceiling (the portion where a room mirror is usually attached). In this case, the occupant head poses 24 of the occupants 51 seated on the rear seat are detected.

The explanation herein has been made on the assumption that the sensor is a visible light camera. Any means for acquiring an image of the head of the occupant may be used. For example, a camera using infrared light in addition to visible light may be used. Information about 3D shapes measured by, e.g., LiDAR may also be used for the execution.

The acquisition state determination section 25 determines an acquisition state of the head pose. Specifically, based on the occupant head pose 24 of the sensing information acquired by the head pose acquisition section 23, the acquisition state determination section 25 determines the acquisition state thereof, specifically the sensing state and the acquisition accuracy. In addition, the state of the occupant 51, specifically the state of the seating position, the pose, the direction, or the feature (e.g., sex and age group), may be determined.

Next, by use of FIG. 5A to FIG. 9, one example of the behavior of the acquisition state determination section 25 is explained. Note that it is assumed here that the head pose acquisition section 23 herein acquires an image of the camera as information about the occupant head pose 24. As means for estimating the head pose from an image of the camera, explanation is made using an example using a known technology (e.g., open source software such as OpenPose) for detecting a two-dimensional pose of the head by recognizing parts (e.g., eyes, a nose, and ears) of the face of the occupant. In addition, the explanation is made particularly focusing on the view point of the acquisition accuracy (sensing accuracy) of the head pose in the acquisition state. In addition, in any examples, the occupant 51g shows an example of a high acquisition accuracy (the acquisition state is fine), and the occupant 51n shows an example of a low acquisition accuracy (the acquisition state is bad). As described below, as the acquisition accuracy is lower, the corresponding occupant is assumed to be easy to develop the motion sickness. Then, the vehicle control is changed.

FIG. 5A to FIG. 5C explain a behavior example of the acquisition state determination section of the vehicle integrated control device of First Embodiment.

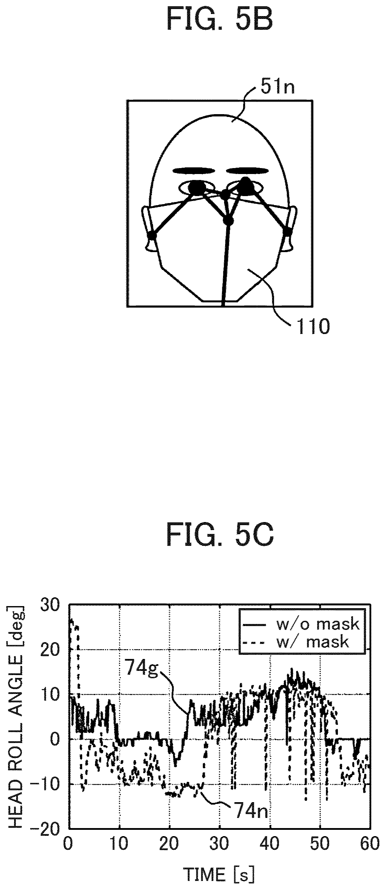

Herein, as an example, the occupant 51n wears a mask 110, and thus the acquisition accuracy of the head pose decreases. With the above known technology, the parts of the face of the occupant 51g are recognized in a recognition image shown in FIG. 5A to estimate the head pose. In contrast, as shown in FIG. 5B, since the mask 110 hides some parts of the face of the occupant 51n, the head pose estimated therefrom tends to be incorrect. For example, in FIG. 5B, since the occupant 51n wears the mask 110, the recognition of the eyes is tilted although the head is generally horizontal. FIG. 5C shows one example of time waves of a head roll angle 74g of the occupant 51g and a head roll angle 74n of the occupant 51n when traveling on the same travel route. In FIG. 5C, the horizontal axis indicates a time [s], and the vertical axis indicates a head roll angle [deg]. The head roll angle 74g shown by the solid line is generally zero degree from 10 to 20 seconds. In contrast, the head roll angle 74n shown by the broken line is offset negatively in the same time duration. In addition, after 30 seconds pass, an occurrence of a jump value is seen in the head roll angle 74n.

As described above, as the number of recognitions of the parts (feature points) of the face is fewer, the acquisition accuracy of the head pose decreases. In addition, the recognition of the head pose change in the vertical direction relative to the image (in this case, in the pitch direction) is remarkably difficult. Thus, the motion sickness sensitivity of the corresponding occupant relative to the longitudinal motion of the vehicle 1 tends to be evaluated low. In this case, it is uncertain whether the occupant 51n wearing the mask 110 tends to actually develop the motion sickness, but the vehicle control change may be insufficient for the occupant who tends to develop the motion sickness. Thus, in this case, the acquisition accuracy is determined to be low. The corresponding occupant is assumed to tend to develop the motion sickness, and then the vehicle control is changed. Note that, this phenomenon occurs regardless of mask wearing, and for example, also occurs when the face is hard to see due to the westering sun.

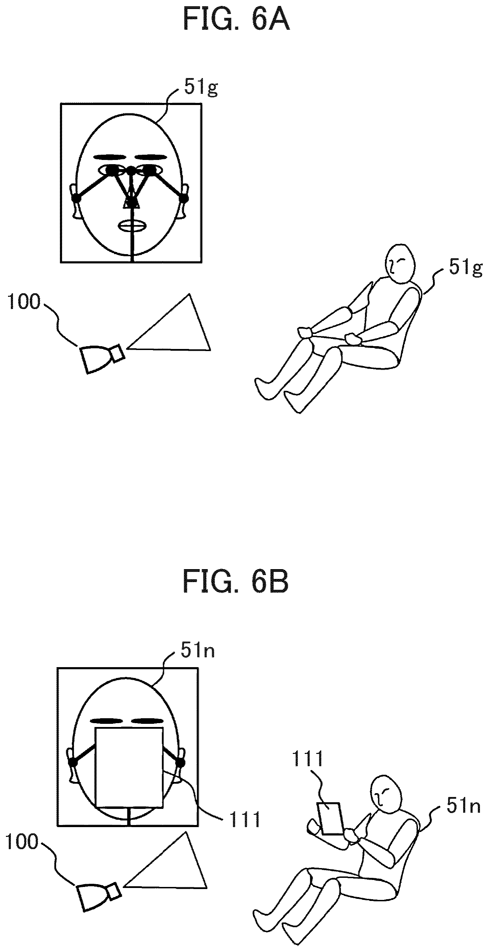

FIG. 6A and FIG. 6B explain a behavior example of the acquisition state determination section of the vehicle integrated control device of First Embodiment.

Here, as an example, the occupant 51n reads a book 111 to hide their face, and thus some of the parts of the face are hidden to decrease the acquisition accuracy of the head pose. This example tends to occur to the occupant 51 on the rear seat on the vehicle when the camera 100 captures the rear side from the front side in the vehicle 1 having a shape of a passenger vehicle. In general, it is known that the occupant 51n reading, e.g., the book 111 tends to further develop the motion sickness than the occupant 51g not reading any books. When the motion sickness sensitivity of the occupant 51n is evaluated low due to a decrease in the acquisition accuracy of the head pose, the vehicle control change may be insufficient for the occupant 51n who tends to develop the motion sickness. Thus, in this case, the acquisition accuracy is determined to be low. The corresponding occupant is assumed to tend to develop the motion sickness, and then the vehicle control is changed. Note that FIG. 6B shows the example using the book 111, and a case in which the face becomes invisible by being hidden by the occupant 51 on the front seat or the head rest instead of the book 111 is also applicable to this example.

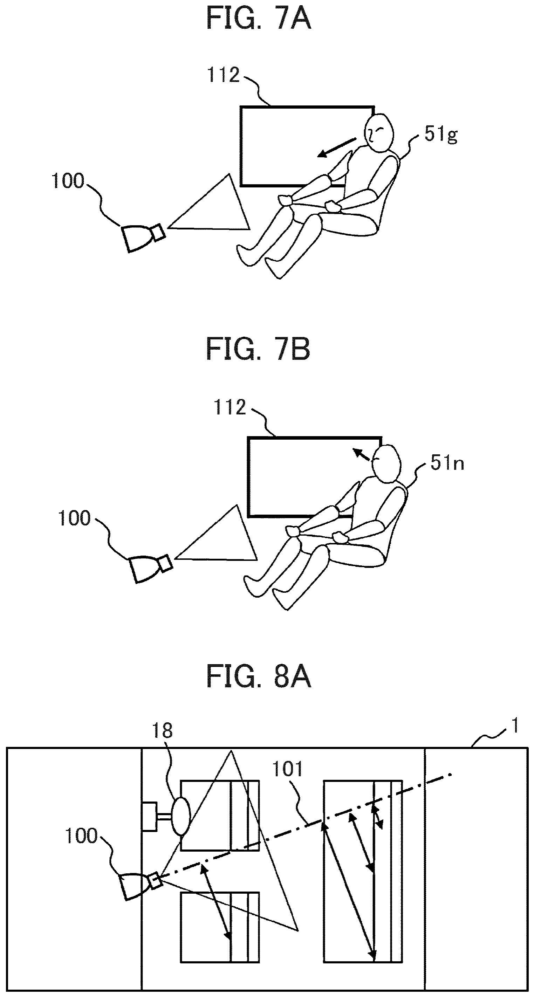

FIG. 7A and FIG. 7B explain a behavior example of the acquisition state determination section of the vehicle integrated control device of First Embodiment.

Here, an example is shown in which, by seeing sideward (e.g., a scenery from a window 112) as the occupant 51n shown in FIG. 7B does, instead of seeing forward as the occupant 51g shown in FIG. 7A does, some of the parts of the face is difficult to recognize, and thus the acquisition accuracy of the head pose decreases. In the present example, it is uncertain whether the occupant 51n actually tends to develop the motion sickness. A person who tends to develop the motion sickness or has developed the motion sickness may see an outer scenery to prevent or reduce the motion sickness. When the motion sickness sensitivity of the occupant 51n is evaluated low due to the decrease in the acquisition accuracy of the head pose, the vehicle control change may be insufficient for the occupant 51n who may tend to develop the motion sickness. Thus, in this case, the acquisition accuracy is determined to be low. The corresponding occupant is assumed to tend to develop the motion sickness, and then the vehicle control is changed.

As explained in FIG. 5A to FIG. 7B, as the number of recognitions of the parts (feature points) of the face is fewer, the acquisition accuracy of the head pose decreases. Thus, the acquisition state determination section 25 may determine the acquisition state based on the number of the feature points of the head of the occupant 51 in the occupant head pose 24 of the sensing information. For example, when the number of the feature points of the head of the occupant 51 is less than a predetermined threshold, the acquisition state is determined to be bad (the acquisition accuracy is low).

Next, FIG. 8A to FIG. 9 show an example in which the acquisition accuracy is determined from a relative positional relationship between the camera 100 and the occupant 51. The acquisition state determination section 25 determines the acquisition state based on the relative positional relationship between the sensor such as the camera 100 that has acquired the sensing information and the head of the occupant 51. More specifically, the acquisition state is determined low as the resolution of the head captured by the camera 100 is lower or the distortion of the shape thereof is larger. As the resolution is lower, the resolution capability for the head pose is low, and a small motion is hard to capture. Thus, the motion sickness sensitivity of the corresponding occupant tends to be evaluated low. For this reason, when the acquisition accuracy of the head pose is determined as low, the corresponding occupant is assumed to tend to develop the motion sickness. Then, the vehicle control is changed.

FIG. 8A to FIG. 8C explain a behavior example of the acquisition state determination section of the vehicle integrated control device of First Embodiment.

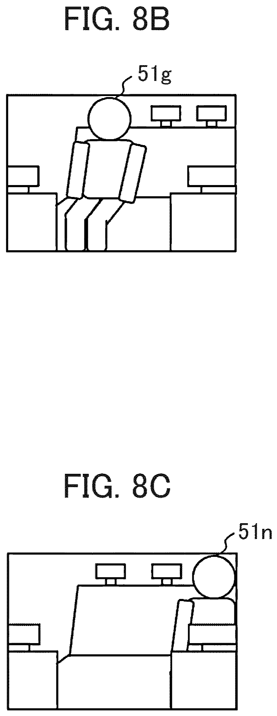

FIG. 8A shows an example in which the camera 100 captures the rear from the front. Here, the camera 100 is mounted as a so-called driver monitor camera. Explanation is made using an example in which the camera 100 is directed to the driver to capture the head of the driver mainly. Note that FIG. 8A shows the example in which the driver seat is on the right side. At this time, as shown in FIG. 8B, the occupant 51g on the rear right seat is near a light axis 101 of the camera 100, and positioned in the center of the image. The acquisition accuracy of the occupant 51g is thus determined as high. In contrast, as shown in FIG. 8C, the occupant 51n on the rear left seat is distant from the light axis 101, and positioned in the corner of the image. The acquisition accuracy is thus determined as low. This is a response based on the following fact. In general, the image by the camera 100 has a higher resolution toward the center, and has a lower resolution toward the corner. The acquisition accuracy of the head pose thus tends to decrease toward the corner. When a wide angle lens is used, image distortion occurs toward the corner, and the acquisition accuracy of the head pose thus tends to decrease toward the corner. Based on this example, the passenger seat is near the camera 100 but closer to the corner in the image. Thus, the acquisition accuracy is assumed to be medium. Similarly, the acquisition accuracy for the rear right seat is assumed to be high as shown in FIG. 8B, the acquisition accuracy for the rear left seat is assumed to be low as shown in FIG. 8C, and the acquisition accuracy for the rear center seat is assumed to be medium therebetween.

Therefore, the acquisition state determination section 25 may determine the acquisition state based on the position of the head of the occupant 51 in the image. For example, as the position of the head of the occupant 51 is farther from the center (toward the corner) in the image, the acquisition state is determined as bad (acquisition accuracy is low). Alternatively, the acquisition state determination section 25 determines the acquisition state based on a vertical distance from the light axis 101 of the sensor such as the camera 100. For example, as the vertical distance from the light axis 101 is longer, the acquisition state is determined as bad (acquisition accuracy is low).

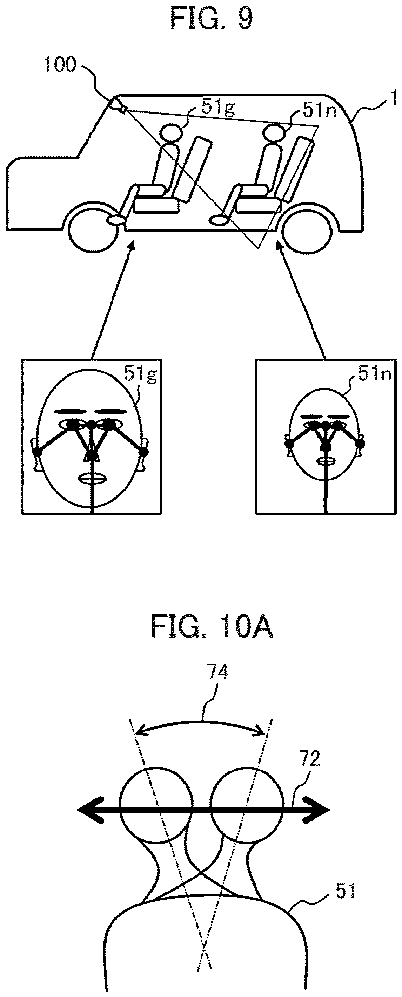

FIGS. 9 explain a behavior example of the acquisition state determination section of the vehicle integrated control device of First Embodiment.

In FIG. 9, as well as in FIG. 8A, the camera 100 captures the rear from the front. In the present example, the acquisition accuracy is assumed to be low as the occupant 51 is farther from the camera 100. That is, the acquisition accuracy of the head pose of the occupant 51g on the front row is high, and the acquisition accuracy of the head pose of the occupant 51n on the rear row is low. This considers that, in general, a nearer same-sized subject provides a high resolution.

Therefore, the acquisition state determination section 25 may determine the acquisition state based on a ratio of the head of the occupant 51 in the image. For example, as the ratio of the head of the occupant 51 in the image is smaller, the acquisition state is determined as bad (the acquisition accuracy is low). Alternatively, the acquisition state determination section 25 determines the acquisition state based on a distance from the sensor such as the camera 100 to the head of the occupant 51. For example, as the distance from the sensor is larger, the acquisition state is determined as bad (the acquisition accuracy is low).

Note that, the above explanation uses the example in which the camera 100 captures the rear from the front in the vehicle 1 having the shape of the passenger vehicle as shown in FIG. 4B. When the camera having a viewing angle of 360 degrees and attached to the ceiling as shown in FIG. 4A or multiple cameras execute capturing in various directions in the vehicle, the acquisition state of the head pose of the occupant 51 seated facing rearward may also be high. It is known that, in general, the occupant 51 seated facing rearward tends to further develop the motion sickness than the occupant 51 not facing rearward. In this case, information such as "facing rearward" is separately acquired as an "acquisition state," the corresponding occupant is assumed to tend to develop the motion sickness, and the vehicle control may be changed.

As described above, some examples of the behaviors of the acquisition state determination section 25 have been shown. In actual, these behaviors are integrated to calculate the acquisition state. As one example, a quantitative value indicating the acquisition accuracy is set as y, and the acquisition accuracy of the head pose is indicated in Equation (1).

[Equation 1]

$$y = c - \sum_{i=1}^{n}(A_i x_i) \quad \cdots (1)$$

Here, c indicates the maximum value of the acquisition accuracy when there is no accuracy decrease factor, $\Sigma$ indicates a sequence sum, x indicates a value indicating the presence or absence of each factor causing the accuracy decrease, A indicates a coefficient indicating a degree of contribution of each factor to the accuracy decrease, and n indicates the n number of factors causing the accuracy decrease. For example, on the assumption that x1 is "the number of reduced feature points in a head pose measurement," x2 is "a distance from the camera to an object (m)," and x3 is "a lateral distance from a light axis of the camera to an object (m)," c = 5, A1 = 0.5, A2 = 0.1, and A3 = 0.05. At this time, with respect to the occupant 51g seated on the rear right seat and seeing forward as shown in FIG. 8B, x1 = 0, x2 = 3 m, x3 = 1 m, and then y = 4.65. In contrast, with respect to the occupant 51n seated on the rear left seat as shown in FIG. 8C and wearing the mask as shown in FIG. 5B, since the nose and the mouth are invisible by the mask, x1 = 1, x2 = 3 m, x3 = 3 m, and then y = 3.55. In this case, since the occupant 51n has the reduction amount in the acquisition accuracy about three times compared to the occupant 51g, a target value change width of the after-mentioned vehicle motion increases about three times.

Note that the method of acquiring the quantitative value y has been shown. This is not limited as the configuration of Equation. The quantitative value may be described using a higher order function and a nonlinear function. The quantitative value may be acquired using a lookup table in response to a value of each factor.

Note that the occupant may change the head pose regardless of the vehicle motion. In this case, when activity recognition of the occupant is executable to the image acquired by the head pose acquisition section 23 through an image recognition technology, the acquisition state determination section 25 separates the head pose change due to the vehicle motion by use of that information. In addition, in consideration of the fact that the head pose may change regardless of the vehicle motion, the acquisition accuracy may be determined only when the vehicle motion, particularly the acceleration in the translation direction, is equal to or more than a certain value.

The vehicle motion acquisition section 26 acquires vehicle motion information indicating a state of the motion of the vehicle. Specifically, the vehicle motion acquisition section 26 acquires vehicle information such as a speed, an acceleration, and an angular speed that are generated on the vehicle in the translation direction and in the rotation direction. As shown in FIG. 2, the detection values of the longitudinal, lateral, and vertical accelerations and the angular speeds of roll, pitch, and yaw may be acquired from the combine sensor 4. The calculation (estimation) may be made from the manipulation amount of each actuator such as the motor 12, the braking mechanism 13, the steering mechanism 14, and the suspension 15. Further, the detection values of the angles of roll and pitch may be acquired from the information about the stroke sensor of the suspension 15 attached to each wheel.

The head motion estimation section 27 estimates and outputs the head motion of the occupant based on at least one of the target value 22 generated by the target value generation section 21 and the vehicle motion information acquired by the vehicle motion acquisition section 26 and based on the occupant head pose 24 acquired by the head pose acquisition section 23. Specifically, the head motion estimation section 27 learns and estimates a tendency of the head motion of the occupant based on at least one of the target value 22 and the vehicle motion information and on the occupant head pose 24, and estimates whether the occupant tends to develop the motion sickness (motion sickness sensitivity), and calculates a motion sickness sensitivity index 76.

In that case, in the present embodiment, the head motion estimation section 27 corrects an output in response to the acquisition state acquired by the acquisition state determination section 25. Specifically, the head motion estimation section 27 corrects an estimation result of the head motion in response to the acquisition state. More Specifically, the acquisition state determination section 25 determines the acquisition accuracy of the head pose as the acquisition state, and the head motion estimation section 27 corrects the estimation result to the estimation result for more ease of motion compared to the estimation result not considering the acquisition accuracy when the acquisition accuracy is low. As described below in detail, the head motion estimation section 27 of the present embodiment changes an estimation tendency of the head motion based on the acquisition state acquired by the acquisition state determination section 25.

As a known example of the motion sickness sensitivity index 76 for evaluating the motion sickness sensitivity of the occupant, the Motion Sickness Incidence (MSI), the incidence of the motion sickness, is mentioned. The Motion Sickness Incidence (MSI) is calculable based on three inputs of "tri-axial head acceleration + gravitational acceleration," "tri-axial head angular speed," and "tri-axial head acceleration." Here, the "head acceleration" and the "head angular speed" mean the acceleration and head angular speed experienced by the head of the occupant on the vehicle 1. The Motion Sickness Incidence (MSI) is an index such that, as this index is smaller, motions sickness is hard to be developed. It is desirable to generate a target value for the vehicle motion to reduce the Motion Sickness Incidence (MSI). The principle of the MSI suggests that a head motion of the occupant in response to a certain vehicle motion relates to the motion sickness incidence. In the present embodiment, the motion sickness sensitivity index 76 is explained on the premise of the MSI. As described below, the target value correction section 28 corrects the target value to reduce the head motion of the occupant based on the estimation result of the estimated head motion and outputs the corrected target value.

As another example of the motion sickness sensitivity index 76, the MSD (Motion Sickness Dose Value) is mentioned. This is a value of a specific frequency component extracted from the acceleration experienced by a human body. Due to this specific frequency component, the motion sickness is particularly easily developed. It is commonly known that, as this value is higher, the motion sickness tends to be developed. Therefore, when this sensitivity index is focused, a target value of a vehicle motion is generated to control the longitudinal, lateral, and vertical accelerations not to generate that specific frequency component.

Note that the motion sickness sensitivity index 76 is not limited to the above index. For example, a current incidence of the motion sickness may be calculated from vital signals (sweating, pulse, etc.) of the occupant. The incidence may be calculated by accepting an input about ease of developing the motion sickness from the occupant or based on a past motion sickness history of the occupant.

By use of FIG. 10A to FIG. 12, one example of the behavior of the acquisition state determination section 25 is explained.

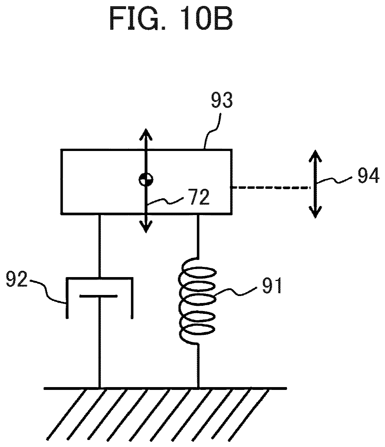

FIGS. 10A and 10B show an explanation view indicating one example of the head motion estimation method in the head motion estimation section of the vehicle integrated control device of First Embodiment.

FIG. 10A shows a state of generating the head roll angle 74 by a lateral acceleration 72 on the occupant 51. FIG. 10B shows an example of using a mechanics model of a general spring-mass-damper system as a head motion model. Note that, in FIG. 10A and FIG. 10B, explanation is made using the roll direction as an example, and the pitch direction is expressible using the same model.

First, as shown in FIG. 10A, when the lateral acceleration 72 is generated on the occupant 51, an inertial acceleration is generated on the head to generate the head roll angle 74. At this time, it is known that the neck of the occupant 51 (the connection portion between the shoulder and the head) has properties of a spring (reaction force generation in proportion to displacement) and a damper (reaction force generation in proportion to temporal change of displacement) in general. When this configuration is simplified as the head motion model, the configuration in which an inertia 93 is grounded via the spring 91 and the damper 92 is expressible as shown in FIG. 10B.

The mechanical input to the present model is an inertial acceleration occurring in the center of gravity of the inertia 93, and a displacement 94 generated accordingly is relevant to the head roll angle 74. By assuming such a model, the temporal change of the head roll angle 74 of the occupant due to the temporal change of the lateral acceleration 72 set in the target value 22 becomes estimable.

Coefficients of the spring 91 and the damper 92 shown in FIG. 10B are considered as different depending on a person (individual differences exist). The head motion estimation section 27 learns the coefficients of the spring 91 and the damper 92. In general, as the coefficients of the spring 91 and the damper 92 are larger, the head motion is small.

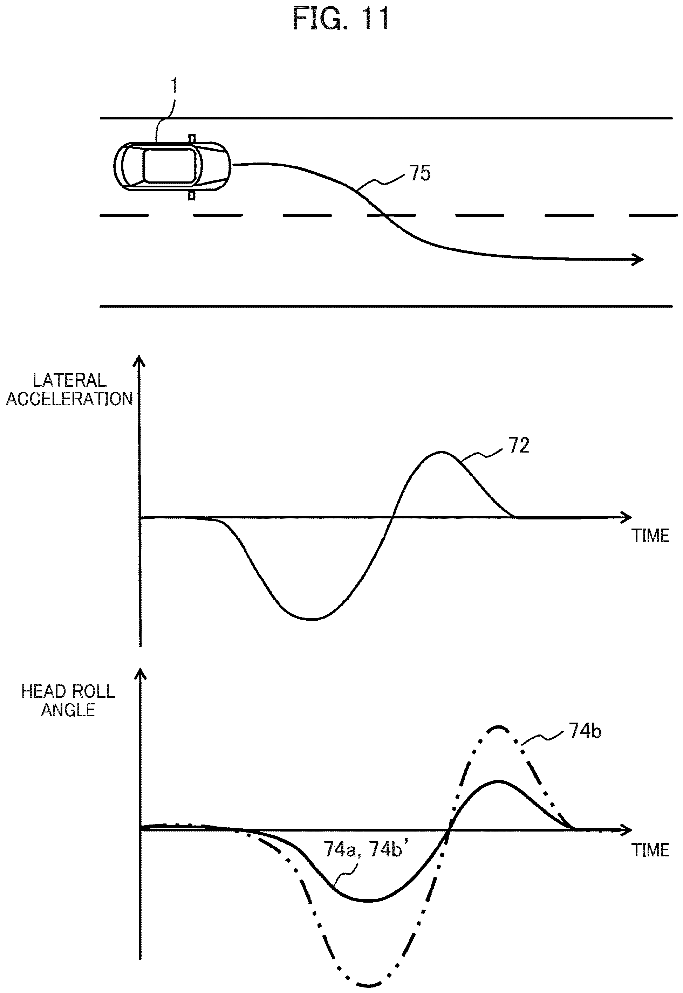

FIG. 11 shows an explanation view indicating one example of travel data for coefficient learning of the head motion estimation in the head motion estimation section of the vehicle integrated control device of First Embodiment. FIG. 11 explains an example of learning the coefficients of the spring 91 and the damper 92. In the graph in the middle row of FIG. 11, the vertical axis indicates a lateral acceleration, and the horizontal axis indicates a time. In the graph in the lower row of FIG. 11, the vertical axis indicates a head roll angle, and the horizontal axis indicates a time.

In FIG. 11, it is assumed that, as shown in the upper row of the figure, the vehicle 1 changes lanes from the left lane to right lane on a two-lane road. The lateral acceleration 72 occurs as shown in the graph in the middle row of the figure. That is, at first, rightward steering is made to generate the negative lateral acceleration 72, and next, leftward steering is made to generate the positive lateral acceleration 72. At this time, with respect to the occupant 51a whose head is hard to motion and the occupant 51b whose head is easy to motion, the head roll angle 74 differs in response to the same lateral acceleration 72 as 74a, 74b, respectively. Then, these are shown as the original head roll angles 74a, 74b.

In addition, when the acquisition accuracy of the head pose of the same occupant 51b is low, the head roll angle 74 is acquired smaller than the original head roll angle 74b with the high acquisition accuracy. Here, it is assumed that the acquisition result of the head roll angle 74 of the occupant with the low acquisition accuracy of the head pose has a size matching 74a, and this result is shown as a head roll angle 74b'.

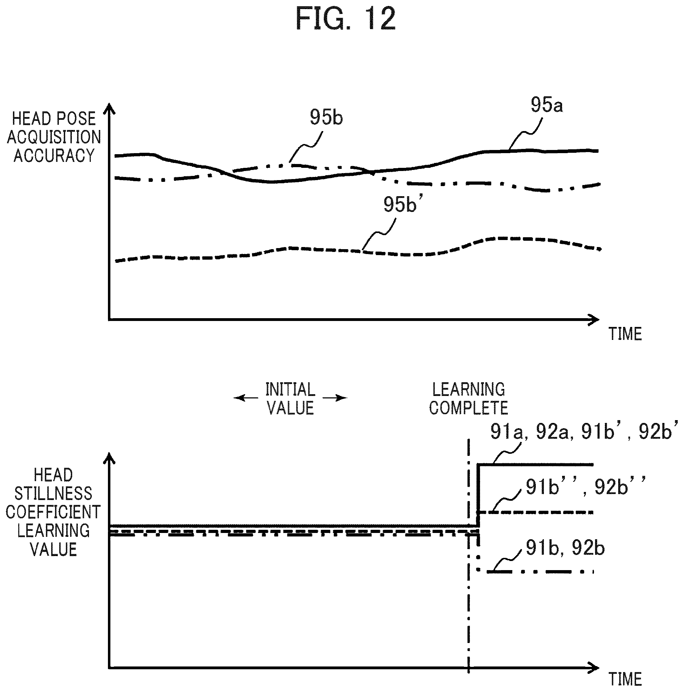

FIG. 12 explains one example of a coefficient learning result of the head motion estimation in the head motion estimation section of the vehicle integrated control device of First Embodiment. The vertical axis of the graph in the upper row of FIG. 12 indicates a head pose acquisition accuracy 95, and the lateral axis thereof indicates a time. The vertical axis of the graph in the lower row of FIG. 12 indicates a head stillness coefficient learning value, and the lateral axis thereof indicates a time.

FIG. 12 shows an example in which, in the travel scene shown in FIG. 11, the acquisition state determination section 25 acquires the head pose acquisition accuracy 95 described above as the acquisition state, and in consideration of the head pose acquisition accuracy 95, the coefficients of the spring 91 and the dumper 92 are learned.

First, the graph in the upper row shows one example of chronological changes in which the head pose acquisition accuracy 95 is calculated based on Equation (1) as the head pose acquisition accuracies 95a, 95b with respect to the occupants 51a, 51b. The acquisition accuracies are both generally high. In contrast, the head pose acquisition accuracy 95b' shows an example in which the head pose acquisition accuracy 95 for the same occupant 51b is constantly low.

The graph in the lower row shows a behavior change of the head motion estimation section 27 based on the above difference of the head pose acquisition accuracy 95. The head motion estimation section 27 learns the coefficients of the spring 91 and the dumper 92 from the chronological relationship between the lateral acceleration 72 and head roll angle 74 shown FIG. 11.

When the head pose acquisition accuracy 95 is high, it is assumed that a spring coefficient 91b for the occupant 51b is substantially half the size of a spring coefficient 91a for the occupant 51a with respect to a spring coefficient to be identified because the amplitude of the head roll angle 74b is about two times greater than that of the head roll angle 74a, for example, in FIG. 11. Damper coefficients 92a, 92b are assumed to indicate the similar tendency. Here, an example is shown in which at an initial time, learning of the coefficients of the spring 91 and the dumper 92 is incomplete to indicate an initial value, and the learning is complete after the duration of the dash-dotted line is shown. After the completion of the learning, the learning values of the coefficients for the occupant 51b (the spring coefficient 91b, the damper coefficient 92b) are about half of the learning values for the occupant 51a (the spring coefficient 91a, the damper coefficient 92a). Note that the graph in the lower row of FIG. 12 shows that it is harder to motion in the upper direction because stillness is higher in the upper direction.

In contrast, when the acquisition accuracy for the same occupant 51b, such as the head pose acquisition accuracy 95b', is small, the head roll angle 74b' having a smaller amplitude than that of the original head roll angle 74b is acquired. Then, when learning is made using the head roll angle 74b' without considering the acquisition accuracy, the estimation result is such that the learning values of the coefficients for the occupant 51b (the spring coefficient 91b', the damper coefficient 92b') are similar to the learning values of the coefficients for the occupant 51a (the spring coefficient 91a, the damper coefficient 92a). As a result, when the travel control is made using such a normal estimation result not considering the acquisition accuracy, the travel control is insufficient for the occupant 51b having a high sensitivity for motion sickness.

Then, the head motion estimation section 27 of the present embodiment corrects the estimation result to the estimation result for more ease of motion compared to the estimation result not considering the acquisition accuracy. Specifically, when the head pose acquisition accuracy 95b' is low, the estimation result (output) is corrected to the learning values of the coefficients (the spring coefficient 91b", the damper coefficient 92b") for high ease of motion, which are smaller than the learning values of the coefficients of the normal estimation result not considering the acquisition accuracy (the spring coefficient 91b', the damper coefficient 92b'). Note that the correction is made to output the estimation result for less ease of motion compared to the learning values of the original coefficients (the spring coefficient 91b, the damper coefficient 92b) to prevent an excessive correction. Thus, when the acquisition accuracy is low, the ease of development of the motion sickness of the corresponding occupant is revised upward to lower the coefficients, that is, to correct the estimation in the direction in which the head is easy to motion.

Note that, as described above, in consideration of the fact that the pose of the head of the occupant may change regardless of the vehicle motion in the learning, it is preferable that, only when the vehicle motion, particularly the acceleration in the translation direction is a certain value or more, the learning is made.

The target value correction section 28 corrects the target value 22 to reduce the head motion, and outputs the corrected value as a final target value 29 based on the estimation result of the head motion estimated by the head motion estimation section 27. Specifically, the target value correction section 28 corrects the target value 22 of the inputted type, generates a target value of the type that has not been inputted, and outputs the final target value 29. Here, the target value correction section 28 functions to generate a vehicle motion target considering ride comfort and motion sickness reduction, and uses the estimation result (learning values of coefficients) estimated in the head motion estimation section 27 to generate the final target value 29 for optimization of the motion sickness sensitivity index 76. The target value correction section 28 corrects at least one of the travel speed, longitudinal, lateral, and vertical accelerations, jerk, angles of roll, pitch, and yaw, angular speed, and angular acceleration of the vehicle 1 in the target values 22. Here, the jerk is a time derivative of an acceleration, and has a high relationship with ride comfort, and thus added as a candidate to be corrected.

In the present embodiment, the head motion estimation section 27 corrects the estimation result in consideration of the acquisition accuracy. Then, the target value correction section 28 performs the travel control by use of this corrected estimation result to consequently prevent an insufficient travel control for the occupant 51b having a high sensitivity for the motion sickness.

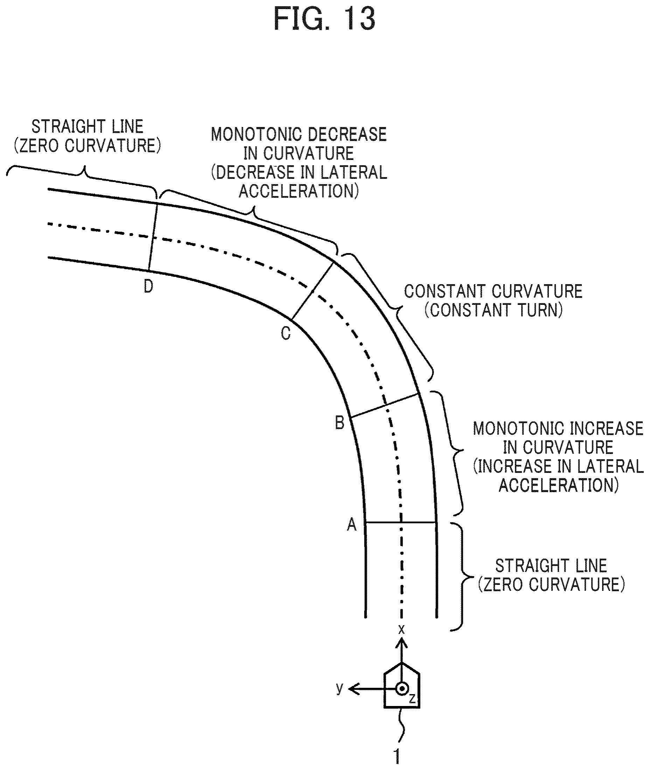

By use of FIG. 13 to FIG. 17, one example of the behavior of the target value correction section 28 is explained.

FIG. 13 shows an explanation view indicating one example of a travel scene for explaining a behavior of the target value correction section of the vehicle integrated control device of First Embodiment.

As shown in FIG. 13, the road shape explained here has a left curve. The vehicle 1 enters this left curve road. The driving manipulation executed here is a left turn. The road shown here is divided into a first section of a zero curvature (straight line) (to A), a second section (A to B) in which the curvature gradually increases (monotonic increase in curvature: increase in lateral acceleration), a third section (B to C) having a constant curvature (constant turn), a fourth section (C to D) in which the curvature gradually decreases (monotonic decrease in curvature: decrease in lateral acceleration), and a fifth section (D to) having a zero curvature (straight line).

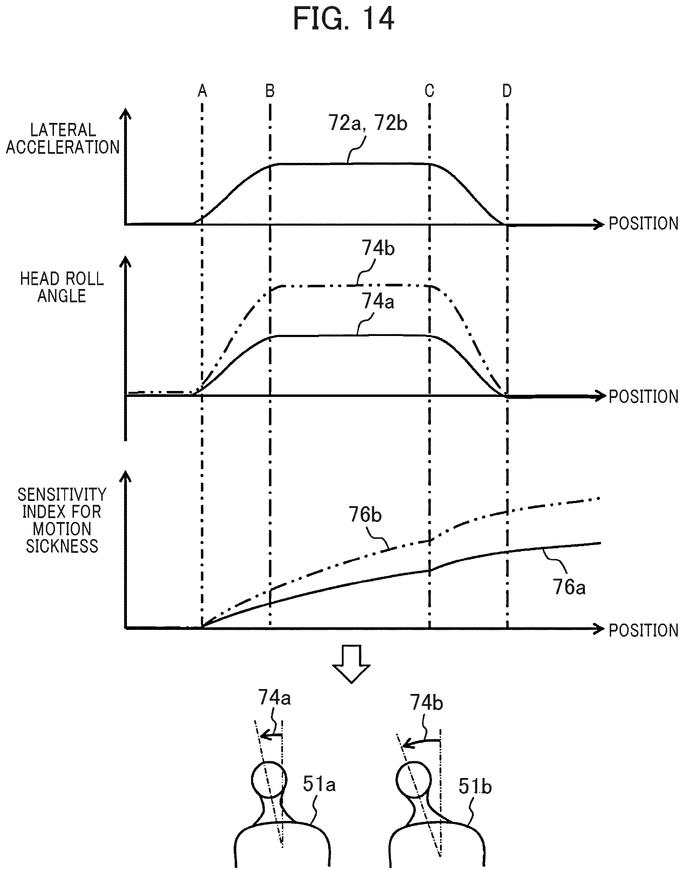

FIG. 14 shows an explanation view indicating one example of a behavior of the target value correction section of the vehicle integrated control device of First Embodiment. In FIG. 14, the vertical axis of the first graph indicates the lateral acceleration 72, the vertical axis of the second graph indicates the head roll angle 74, the vertical axis of the third graph indicates the motion sickness sensitivity index 76, and each horizontal axis of the first to third graphs indicates a position. This position is a travel distance from the position just before approach to the curve. The dash-dotted lines respectively correspond to the sections A to D shown in FIG. 13.

Here, explanation is made on the assumption that travel is made on the curve sections A to D with the speed 71 being kept constant. It is assumed that the two occupants 51a, 51b are on the vehicle 1. In general, the motion of the head differs depending on the occupant or depending on a task by the same occupant on the vehicle in response to the same vehicle behavior (lateral acceleration/roll angle). The motion of the head of the occupant 51a is small in response to the certain lateral acceleration 72. The motion of the head of the occupant 51b is large in response to the same lateral acceleration 72. These are individual differences. At this time, as shown in the first graph of FIG. 14, the lateral accelerations 72a, 72b respectively occurring to the occupants 51a, 51b are the same as each other. The lateral accelerations 72a, 72b increases as the curvature gradually increases in the second section (A to B). The lateral accelerations 72a, 72b transitions at a constant value in the third section (B to C) where the curvature is constant (constant turn). The lateral accelerations 72a, 72b increases as the curvature gradually increases in the fourth section (C to D).

At this time, when the head roll angles 74 of the two persons are compared to each other in the second graph, the head roll angle of the occupant 51a transitions in the same way as the lateral acceleration 72a at first as shown in the head roll angle 74a. Note that, when the vehicle 1 moves leftward relative to the travel direction, that is, when the vehicle 1 turns left, the lateral acceleration 72 is defined as positive. When the head roll angle 74 calculated at this time also rolls in the outward turn (rightward) direction, the head roll angle 74 is defined as positive (clockwise relative to the travel direction). In contrast, the head roll angle 74b of the occupant 51b is similar in waveform to the head roll angle 74a, but has a large absolute value as a result. As above, this is because the head motion of the occupant 51b is large relative to the certain lateral acceleration 72 as an individual difference.

In such a vehicle behavior, as one example of a time transition of the MSI as the motion sickness sensitivity index 76, the third graph shows the motion sickness sensitivity indexes 76a, 76b. When the vehicle 1 approaches the left curve, the head of the occupant recognizes the lateral acceleration. In addition, in response to the motion in the outward turn by inertia, the roll angle of the head is generated. With these two effects, the increasing tendency becomes remarkable in the second section (A to B) and the fourth section (C to D) in which the lateral acceleration 72 and the head roll angle 74 in particular change, and the increase ratio gradually decreases in the section in which the lateral acceleration 72 and the head roll angle 74 become constant. Note that, since the MSI occurs also by the longitudinal acceleration/pitch angle, the MSI already starts to increase before the first section when the vehicle 1 accelerates or decelerates in the curve section or before or after the curve section.

The motion sickness sensitivity index 76a of the occupant 51a whose head is hard to motion transitions smaller than the motion sickness sensitivity index 76b of the occupant 51b whose head is easy to motion. In accordance with the principle of the MSI, the occupant 51b is easier to develop the motion sickness.

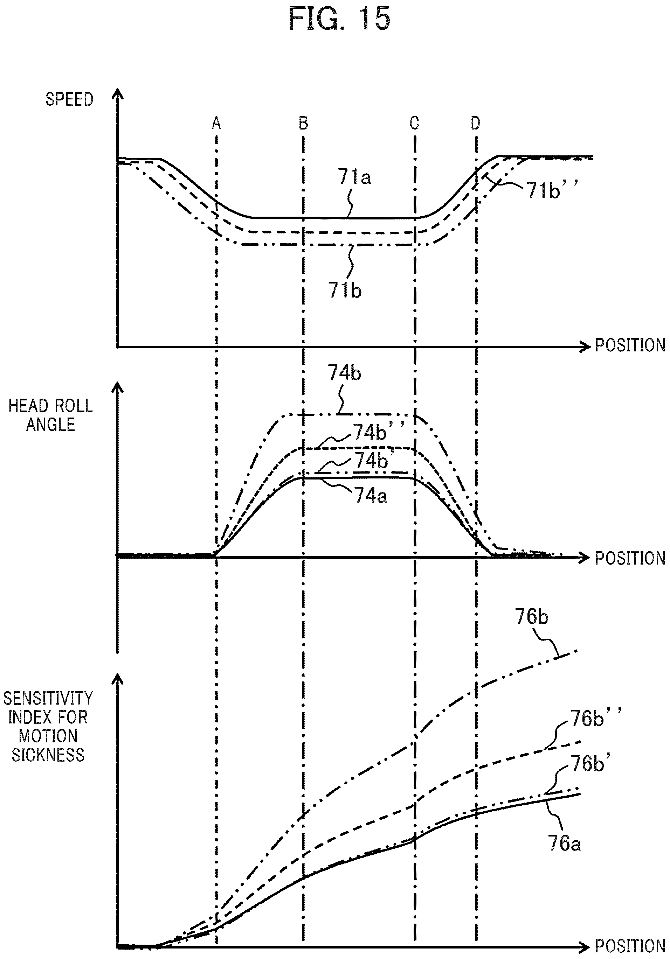

FIG. 15 shows an explanation view indicating one example of a behavior of the target value correction section of the vehicle integrated control device of First Embodiment. In FIG. 15, the vertical axis of the first graph indicates the speed 71, the vertical axis of the second graph indicates the head roll angle 74, the vertical axis of the third graph indicates the motion sickness sensitivity index 76, and each horizontal axis of the first to third graphs indicates a position.

FIG. 15 shows an example in which the speed 71 is changed as the final target value 29. First, the behavior is explained when the acquisition accuracy is high, that is, in the normal case. When the occupant 51b on the vehicle passes through the left curve at a speed 71a that is the same as that of the occupant 51a, the head roll angle 74b of the occupant 51b becomes a higher value compared to the head roll angle 74a of the occupant 51a. As a result, the motion sickness sensitivity index 76b becomes a higher value than the motion sickness sensitivity index 76a. Therefore, the target value correction section 28 generates the final target value 29 to reduce the speed 71a of the target value 22 to a speed 71b. Specifically, the longitudinal acceleration (unshown) corrected to start deceleration earlier than a response to the occupant 51a is generated as the final target value 29. Therefore, the lateral acceleration 72 while passing through the curve is reduced, the head roll angle 74b of the occupant 51b becomes the head roll angle 74b'equivalent to the head roll angle 74a, and the motion sickness sensitivity index 76b becomes the motion sickness sensitivity index 76b' equivalent to the motion sickness sensitivity index 76a. That is, the speed while passing through the curve is reduced for the occupant 51b having the high motion sickness sensitivity, and the motion of the head due to the curve is reduced to suppress the development of the motion sickness.

Next, the behavior when the acquisition accuracy is low is explained. When the acquisition accuracy is low, the amplitude of the head roll angle 74 of the occupant 51b, acquired by the head pose acquisition section 23, is smaller than the original. Thus, it is assumed here that the head roll angle 74 is recognized as the same as the head roll angle 74a, as well as the head roll angle 74b'. When the head motion estimation section 27 does not consider the acquisition accuracy, the motion sickness sensitivity index 76b' of the occupant 51b is equivalent to the motion sickness sensitivity index 76a based on the estimation result of the head motion estimation section 27. Then, the target value correction section 28 determines that the speed 71a of the target value 22 may be maintained. Thus, the occupant 51b may develop the motion sickness.

In contrast, when the acquisition accuracy is low, and when the head motion estimation section 27 outputs the estimation result corrected to the learning values of the coefficients (the spring coefficient 91b", the damper coefficient 92b") for a high ease of motion, which are that are smaller than the learning values of the coefficients (spring coefficient 91b', damper coefficient 92b') of the normal estimation result not considering the acquisition accuracy, the target value correction section 28 generates the final target value 29 for reducing the speed 71a of the target value 22 to the speed 71b" as a result of using the estimation result corrected by the head motion estimation section 27. Specifically, the target value correction section 28 determines that, since the head of the occupant 51b is easy to motion, the head roll angle of the occupant 51b may be larger than that of the occupant 51a when passing through the left curve at the same speed 71a as the occupant 51a. Then, the target value correction section 28 generates the final target value 29 for reducing the speed 71a of the target value 22 to be the speed 71b" smaller than the speed 71a. Specifically, the longitudinal acceleration (unshown) corrected to start deceleration earlier than a response to the occupant 51a is generated as the final target value 29. Thus, the head roll angle 74b" eventually becomes smaller than the original head roll angle 74b. It is expected that the motion sickness sensitivity index becomes the motion sickness sensitivity index 76b" smaller than the motion sickness sensitivity index 76b. Thus, an insufficient motion sickness reduction effect is preventable for the occupant 51b whose head is determined to be easy to motion but is originally easy to motion because the acquisition state is bad.

Here, a method in which the speed 71b" is set as the same as the speed 71b is considerable. The originally low acquisition accuracy of the head roll angle 74b is required to be considered. That is, when the head of the occupant 51b is originally hard to motion, excessive correction is made. The motion sickness is certainly preventable, but instead, a slow vehicle motion may be sensed. Then, when it is not necessarily determined which type the occupant is because of the low acquisition state, but when the motion sickness sensitivity of the corresponding occupant is large in the worst case, it is preferable that the correction amount is set to about a middle degree between both by prioritizing prevention of an insufficient target value change.

Note that the present figure shows the example in which the final target value 29 is generated so that the motion sickness sensitivity index 76b is set to the motion sickness sensitivity index 76b' equivalent to the motion sickness sensitivity index 76a. The final target value 29 may be generated so that the absolute value or change ratio of the motion sickness sensitivity index 76 is within a predetermined range. The following explanation also uses the example in which the final target value 29 is generated so that the motion sickness sensitivity index 76b is set to the motion sickness sensitivity index 76b' equivalent to the motion sickness sensitivity index 76a by use of the MSI as the motion sickness sensitivity index. As well as in the above, the behavior is changeable.

Further, when there are multiple occupants as shown in FIG. 4A, the occupant having the highest motion sickness sensitivity index is selected. The final target value 29 is generated to suppress the motion sickness sensitivity index of the corresponding occupant.

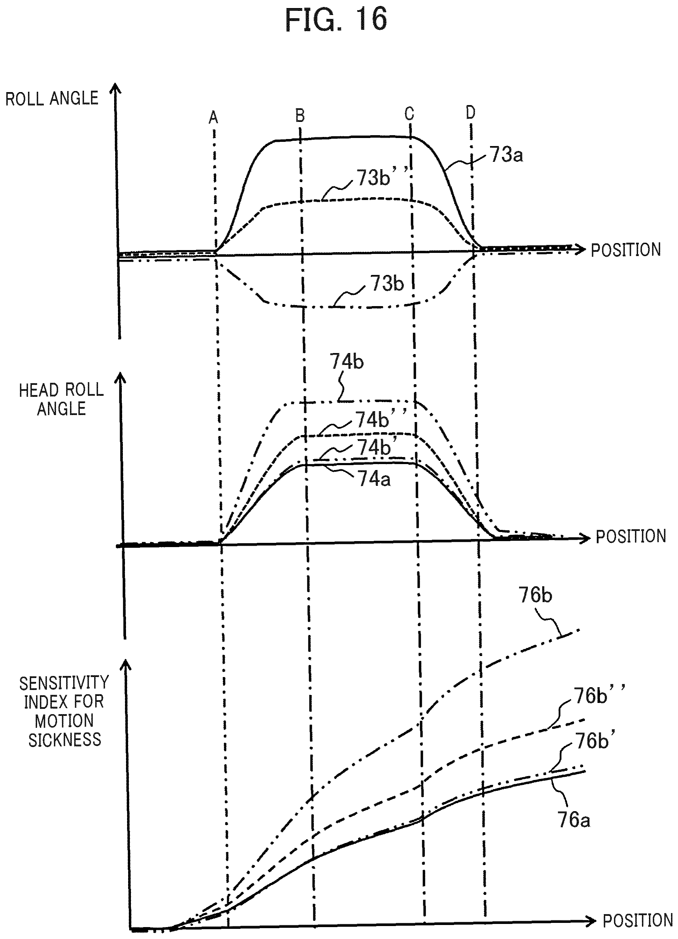

FIG. 16 shows an explanation view indicating one example of a behavior of the target value correction section of the vehicle integrated control device of First Embodiment.

FIG. 16 shows an example in which the speed 71 is not changed as the final target value 29, and the roll angle 73 of the vehicle 1 is changed. FIG. 16 is different from FIG. 15 in that the vertical axis of the first graph indicates a roll angle, and the others are the same as FIG. 15. The different points are mainly explained.

When the occupant 51b on the vehicle passes through the left curve at a roll angle 73a of the target value 22 appropriate for the occupant 51a, the motion sickness sensitivity index 76b becomes higher than the motion sickness sensitivity index 76a. Therefore, the target value correction section 28 generates the final target value 29 for tilt in the turn inward direction such as at a roll angle 73b. As a result, the lateral acceleration 72 by the inertia sensed by the head of the occupant 51b while passing through the curve is reduced, and the motion sickness sensitivity index 76b becomes the motion sickness sensitivity index 76' equivalent to the motion sickness sensitivity index 76a.

Here, when the acquisition accuracy is low, the target value correction section 28 generates the final target value 29 by correcting the roll angle 73a of the target value 22 to, e.g., a roll angle 73b" as a result of using the estimation result corrected by the head motion estimation section 27. In that case, the head roll angle 74b and the motion sickness sensitivity index 76b" are shown in the same way as FIG. 15.

As described above, not only the occurrence of the lateral acceleration/roll angle in approaching the curve but also the longitudinal acceleration/pitch angle during acceleration or deceleration cause the motion sickness. Therefore, since unnecessary deceleration before the curve road may lead to the motion sickness depending on the occupant, the target values other than the speed may be changed while passing through the curve.

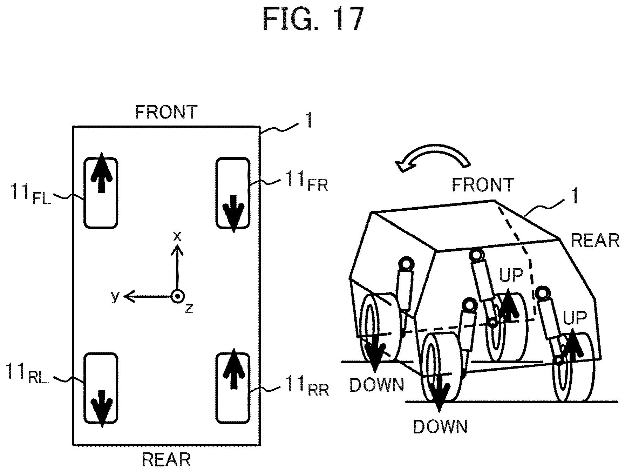

FIG. 17 shows an explanation view indicating one example of behavior of actuators for achieving a behavior of the target value correction section of the vehicle integrated control device of First Embodiment.

FIG. 17 explains one example of a method of changing the roll angle by the motor 12. When the roll angle is generated inward of the turn as shown in FIG. 16 (leftward toward the travel direction), the motor 12 is used as shown in the left of FIG. 17 at first to generate a positive driving force for the front left wheel $11_{FL}$ and the rear right wheel $11_{RR}$, and to generate a negative driving force for the front right wheel $11_{FR}$ and the rear left wheel $11_{RL}$. As a result, as shown in the right side of FIG. 17, in the vehicle 1, a downward suspension force is generated on the left side, and an upward suspension force is generated on the right side. These suspension forces allow the vehicle 1 to tilt leftward, and the pose control for the vehicle 1 appropriate for the final target value 29 generated as an internal command is achieved. Alternatively, an actuator may be mounted to the suspension 15 to generate the suspension force directly.

In accordance with the vehicle integrated control device 2 of First Embodiment described above, the coefficient of the head motion the head pose acquisition section, particularly the acquisition accuracy. Then, the insufficient target value change due to the excessive decrease in the motion sickness sensitivity is prevented when the acquisition accuracy is low, and thus the vehicle motion control for the motion sickness reduction is achievable more certainly.

Second Embodiment

Second Embodiment is a modification of First Embodiment. In First Embodiment, explanation has been made to particularly focus the acquisition accuracy as the acquisition state of the head pose. The acquisition accuracy is defined as a detection accuracy when the head is visible, in general. In contrast, when the relative positional relationship between the camera 100 and the occupant 51 is changed, the head of the occupant 51 may be completely invisible. For this reason, Second Embodiment performs the acquisition state determination in consideration of the case in which the head is completely invisible.

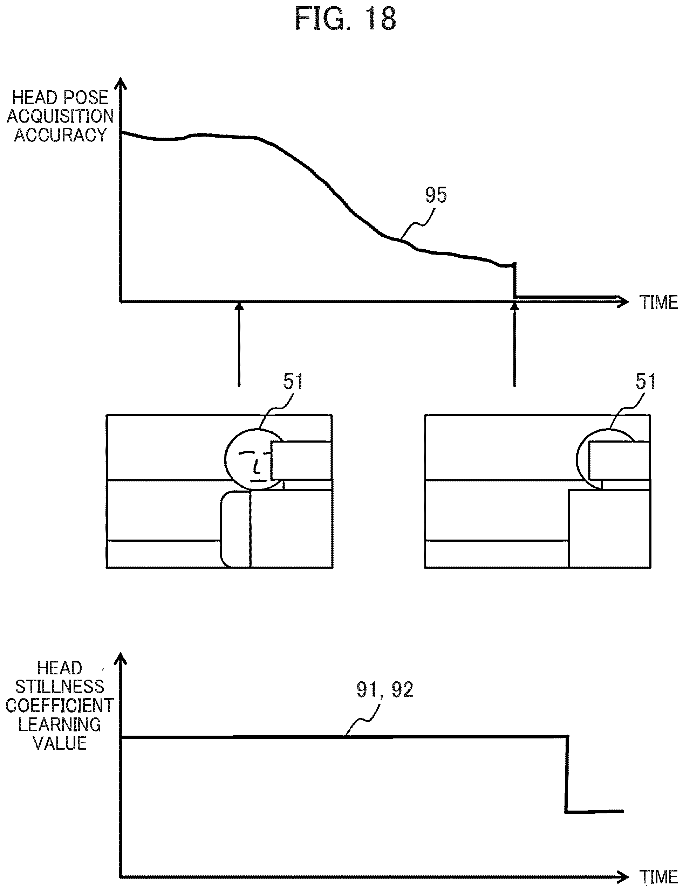

FIG. 18 explains a behavior example of the acquisition state determination section of the vehicle integrated control device of First Embodiment. In the upper row of the graph of FIG. 18, the vertical axis indicates the head pose acquisition accuracy, and horizontal axis indicates a time. In the lower row of the graph of FIG. 18, the vertical axis indicates the head stillness coefficient learning value, and horizontal axis indicates a time.

In the present embodiment, when the head pose of the occupant is completely invisible, the acquisition accuracy of the head pose is defined as 0. In the example of FIG. 18 as well as in the examples of FIG. 4B and FIG. 8A, the camera 100 is mounted on the front side of the vehicle 1 to face rearward, and it is assumed that the occupant 51 is on the rear left seat of the vehicle, and initially, leans to see forward, but midway, starts seeing a left scene (right side in the image).

Focusing on the time transition of the head pose acquisition accuracy 95 in the graph in the upper row of FIG. 18, the value of the head pose acquisition accuracy 95 is high when the occupant 51 sees forward, but the occupant 51 gradually moves leftward (rightward in the image) to decrease the head pose acquisition accuracy 95. Then, after the occupant 51 starts seeing a left scene, the head of the occupant 51 is completely hidden, and the head pose acquisition accuracy 95 is 0. As described above, the acquisition state determination section 25 sets the acquisition accuracy as 0 when the head is invisible.

At this time, the graph in the lower row of FIG. 18 shows a learning example of coefficients of the spring 91 and the damper 92 of the head motion model shown in FIG. 10B. The head motion estimation section 27 estimates that the coefficients are originally high from the head motion of the occupant 51. When the head of the occupant 51 is completely invisible, the acquisition accuracy is 0. After some time from that point, the coefficients are corrected to be low, that is, corrected to be the estimation result for a high ease of motion.

Here, the numeral value after the change may be set using various setting methods. For example, the setting may be made to meet the head motion behavior of a person who is the easiest to develop the motion sickness, the lowest value may be set in the past coefficient change width of the occupant 51, or the coefficients of the head motion behavior may be returned to the default ones so that the width of the head motion of the occupant 51 is set to the width of the motion of a normal (average) human body. When a person is identified as the coefficient for an originally high ease of development of the motion sickness, setting is made to meet the head motion behavior of the person who most easily develops the motion sickness, or when the learning of the coefficients of the corresponding occupant is insufficient, the coefficients may be returned to the default ones. Different responses may be made based on the condition of the corresponding occupant.

In accordance with the vehicle integrated control device 2 of Second Embodiment, in addition to the acquisition accuracy defined on the assumption that the head is visible, the operations when the head is invisible are exceptionally set. In various cases, the vehicle motion control is achievable to appropriately reduce the motion sickness of the occupant 51.

Third Embodiment

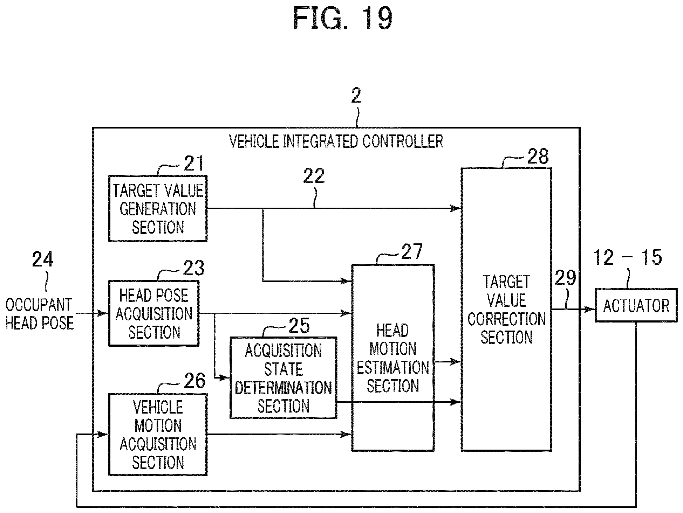

FIG. 19 shows a functional block diagram of the vehicle integrated control device of Third Embodiment.

Third Embodiment is a modification of First Embodiment or Second Embodiment. The difference from First Embodiment or Second Embodiment is that, instead of the correction of outputs in response to the acquisition state by the head motion estimation section 27, the target value correction section 28 corrects outputs in response to the acquisition state.

In Third Embodiment, the head motion estimation section 27 outputs the estimation result not considering the acquisition state. Then, the target value correction section 28 corrects the correction amount of the target value 22 in response to the acquisition state. Specifically, the target value correction section 28 corrects the correction amount for a lower ease of motion compared to the correction amount not considering the acquisition accuracy when the acquisition accuracy is low.

For example, in the example explained in FIG. 15, even when the acquisition accuracy of the occupant 51b is low, the head motion estimation section 27 outputs the same estimation results of the occupant 51a and the occupant 51b (the learning value of the coefficients) as the estimation results not considering the acquisition state. When the target value correction section 28 does not consider the acquisition accuracy, the speed 71a is not changed. Thus, the correction amount of the speed 71a of the target value 22 is 0. In contrast, the target value correction section 28 of the present embodiment corrects the correction amount for a lower ease of motion compared to the correction amount not considering the acquisition accuracy when the acquisition accuracy is low, and determines the correction amount for a speed 71b".

As well as in the example of FIG. 16, when the acquisition accuracy is not considered, the correction amount is 0 with the roll angle 73a being kept, and when the acquisition accuracy is low, the correction is made for the roll angle 73b".

In addition, in the combination with Second Embodiment, when the head of the occupant 51 is invisible as the acquisition state in correcting the output in response to the acquisition state, the target value correction section 28 performs correction for a lower ease of motion compared to the case in which the head is visible.

Note that, the above explanation has been made on the assumption that the acquisition accuracy uniquely corresponds to the correction of the correction amount of the target value 22. In response to the same acquisition accuracy, the correction degree of the correction amount of the target value 22 may be changed as the travel time passes. For example, as the travel time of the same person is longer, there may be a change in which the motion sickness sensitivity decreases by becoming familiar with the travel. In this case, when the travel time is long in the same acquisition accuracy, the correction degree of the correction amount of the target value 22 may be reduced.

Note that the present invention is not limited to the above embodiments, and includes various modifications. For example, the above embodiments are explained in detail for easy understanding of the present invention, which is not necessarily limited to one including all the explained configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

List of Reference Signs

| | |
|---|---|
| 1: | vehicle |
| 11: | wheel |
| 12: | motor |
| 13: | braking mechanism |
| 13a: | wheel cylinder |
| 13b: | brake controller |
| 14: | steering mechanism |
| 14a: | steering controller |
| 14b: | steering motor |
| 15: | suspension |

16: accelerator pedal
16: stroke sensor
16b: acceleration controller
17: brake pedal
18: steering wheel
18a: steering torque detector
18b: steering angle detector
19: external sensor
2: vehicle integrated control device
21: target value generation section
22: target value
23: head pose acquisition section
24: occupant head pose
25: acquisition state determination section
26: vehicle motion acquisition section
27: head motion estimation section
28: target value correction section
29: final target value
3: external controller
4: combine sensor
51: occupant
71: speed
72: lateral acceleration
73: roll angle
74: head roll angle
75: travel trajectory
76: motion sickness sensitivity index
91: spring
92: damper
93: inertia
94: displacement
95: head pose acquisition accuracy
100: camera
101: light axis
110: mask
111: book
112: window

**Claims**

1. A vehicle integrated control device comprising:

    a target value generation section for generating a target value of a motion control of the vehicle;
    a head pose acquisition section for acquiring a head pose of an occupant;
    an acquisition state determination section for determining an acquisition state of the head pose;
    a vehicle motion acquisition section for acquiring vehicle motion information indicating a state of a motion of the vehicle;
    a head motion estimation section for estimating and outputting a head motion of the occupant based on at least one of the target value and the vehicle motion information and the head pose; and
    a target value correction section for correcting and outputting the target value to reduce the head motion based on an estimation result of an estimated head motion,
wherein the head motion estimation section or the target value correction section corrects an output in response to the acquisition state.

2. The vehicle integrated control device according to claim 1
wherein the head motion estimation section corrects an estimation result of the head motion in response to the acquisition state.

3. The vehicle integrated control device according to claim 2
wherein the acquisition state determination section determines an acquisition accuracy of the head pose as the acquisition state, and the head motion estimation section performs correction to output an estimation result indicating more ease of motion than the estimation result not considering the acquisition accuracy when the acquisition accuracy is low.

4. The vehicle integrated control device according to claim 1

    wherein the target value correction section corrects
    a correction amount of the target value in response to the acquisition state.

5. The vehicle integrated control device according to claim 4

    wherein the acquisition state determination section determines an acquisition accuracy of the head pose as the acquisition state, and
    the target value correction section corrects the correction amount indicating less ease of motion than the correction amount not considering the acquisition accuracy when the acquisition accuracy is low.

6. The vehicle integrated control device according to claim 1

    wherein the head pose acquisition section acquires sensing information about sensing of the head of the occupant, and
    the acquisition state determination section determines the acquisition state based on the sensing information.

7. The vehicle integrated control device according to claim 6
wherein the acquisition state determination section determines the acquisition state based on a number of feature points of the head of the occupant in the sensing information.

8. The vehicle integrated control device according to claim 6

wherein the head pose acquisition section acquires an image as the sensing information, and the acquisition state determination section determines the acquisition state based on a position of the head of the occupant in the image.

9. The vehicle integrated control device according to claim 6

wherein the head pose acquisition section acquires an image as the sensing information, and the acquisition state determination section determines the acquisition state based on a ratio of the head of the occupant in the image.

10. The vehicle integrated control device according to claim 6
wherein the acquisition state determination section determines the acquisition state based on a relative positional relationship between a sensor that has acquired the sensing information and the head of the occupant.

11. The vehicle integrated control device according to claim 10
wherein the acquisition state determination section determines the acquisition state based on a vertical distance from a light axis of the sensor.

12. The vehicle integrated control device according to claim 10
wherein the acquisition state determination section determines the acquisition state based on a distance from the sensor to the head of the occupant.

13. The vehicle integrated control device according to claim 1
wherein, when the head of the occupant is invisible as the acquisition state in correcting an output in response to the acquisition state, the head motion estimation section or the target value correction section performs correction to output an estimation result indicating more ease of motion or less ease of motion compared to when the head is visible.

14. The vehicle integrated control device according to claim 1
wherein the head motion estimation section estimates that a width of the head motion of the occupant is a width of a motion of an average human body when the head of the occupant is invisible as the acquisition state.

15. The vehicle integrated control device according to claim 1
wherein the target value correction section corrects at least one of a travel speed, longitudinal, lateral, and vertical accelerations, a jerk, angles of roll, pitch, and yaw, an angular speed, and an angular acceleration of the vehicle in the target values.

# FIG. 1

# FIG. 2

ACCELERATION COMMAND

BRAKING COMMAND

STEERING TORQUE/ STEERING ANGLE

EXTERNAL INFORMATION

3

EXTERNAL CONTROLLER

LONGITUDINAL COMMAND VALUE

LATERAL COMMAND VALUE

VERTICAL COMMAND VALUE

ROLL COMMAND VALUE

PITCH COMMAND VALUE

YAW COMMAND VALUE

2

VEHICLE INTEGRATED CONTROLLER

14

COMBINE SENSOR

LONGITUDINAL/ LATERAL/VERTICAL ACCELERATIONS

ANGULAR VELOCITIES OF ROLL, PITCH, AND YAW

OCCUPANT HEAD POSE ~24

MOTOR ~12

BRAKING MECHANISM ~13

STEERING MECHANISM ~14

SUSPENSION ~15

19

# FIG. 3

VEHICLE INTEGRATED CONTROLLER 2

TARGET VALUE GENERATION SECTION 21

OCCUPANT HEAD POSE 24

HEAD POSE ACQUISITION SECTION 23

VEHICLE MOTION ACQUISITION SECTION 26

ACQUISITION STATE DETERMINATION SECTION 25

HEAD MOTION ESTIMATION SECTION 27

TARGET VALUE CORRECTION SECTION 28

22

76

29

ACTUATOR 12 – 15

# FIG. 4A

# FIG. 4B

# FIG. 5A

# FIG. 5B

51n

110

# FIG. 5C

# FIG. 6A

51g

100

51g

# FIG. 6B

51n

100

111

111

51n

# FIG. 7A

# FIG. 7B

# FIG. 8A

# FIG. 8B

51g

# FIG. 8C

51n

# FIG. 9

# FIG. 10A

# FIG. 10B

# FIG. 11

LATERAL ACCELERATION

TIME

72

HEAD ROLL ANGLE

TIME

74b

74a, 74b'

# FIG. 12

# FIG. 13

STRAIGHT LINE
(ZERO CURVATURE)

MONOTONIC DECREASE
IN CURVATURE
(DECREASE IN LATERAL
ACCELERATION)

CONSTANT CURVATURE
(CONSTANT TURN)

D

C

B

MONOTONIC INCREASE
IN CURVATURE
(INCREASE IN LATERAL
ACCELERATION)

A

STRAIGHT LINE
(ZERO CURVATURE)

x

y

z

1

# FIG. 14

# FIG. 15

# FIG. 16

# FIG. 17

# FIG. 18

HEAD POSE
ACQUISITION
ACCURACY

95

TIME

51

51

HEAD
STILLNESS
COEFFICIENT
LEARNING
VALUE

91, 92

TIME

FIG. 19

## INTERNATIONAL SEARCH REPORT

| International application No. |
|---|
| **PCT/JP2024/010426** |

### A. CLASSIFICATION OF SUBJECT MATTER

***B60W 40/08***(2012.01)i; ***B60R 1/29***(2022.01)i; ***B60W 30/02***(2012.01)i; ***G08G 1/16***(2006.01)i
FI: B60W40/08; B60R1/29; B60W30/02; G08G1/16 F

According to International Patent Classification (IPC) or to both national classification and IPC

### B. FIELDS SEARCHED

Minimum documentation searched (classification system followed by classification symbols)

B60W30/00-40/13; B60R1/29; G08G1/00-1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-62821 A (KABUSHIKI KAISHA TOYOTA CHUO KENKYUSHO) 22 April 2021 (2021-04-22) <br> paragraphs [0011]-[0155], fig. 15 | 1-2, 4, 6, 8, 15 |
| A | | 3, 5, 7, 9-14 |
| Y | JP 2021-105958 A (MAZDA MOTOR CORPORATION) 26 July 2021 (2021-07-26) <br> paragraphs [0022]-[0060], fig. 3 | 1, 4, 6, 8, 15 |
| A | | 3, 5, 7, 9-14 |
| Y | WO 2020/170640 A1 (MITSUBISHI ELECTRIC CORPORATION) 27 August 2020 (2020-08-27) <br> paragraphs [0005]-[0093] | 1-2, 4, 6, 8, 15 |
| A | | 3, 5, 7, 9-14 |
| A | CN 114633758 A (ZHEJIANG UNIVERSITY) 17 June 2022 (2022-06-17) <br> entire text | 1-15 |

☑ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
| --- |
| **PCT/JP2024/010426** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-183594 A (HITACHI ASTEMO, LTD.) 13 December 2022 (2022-12-13) entire text | 1-15 |

Form PCT/ISA/210 (second sheet) (July 2022)

INTERNATIONAL SEARCH REPORT
Information on patent family members

International application No.

**PCT/JP2024/010426**

| Patent document cited in search report | | | Publication date (day/month/year) | Patent family member(s) | | | Publication date (day/month/year) |
|---|---|---|---|---|---|---|---|
| JP | 2021-62821 | A | 22 April 2021 | (Family: none) | | | |
| JP | 2021-105958 | A | 26 July 2021 | US | 2021/0197833 | A1 | |
| | | | | paragraphs [0035]-[0074], fig. 3 | | | |
| | | | | EP | 3842998 | A1 | |
| | | | | CN | 113044044 | A | |
| WO | 2020/170640 | A1 | 27 August 2020 | US | 2022/0135054 | A1 | |
| | | | | paragraphs [0007]-[0114] | | | |
| | | | | DE | 112020000867 | T5 | |
| | | | | CN | 113439049 | A | |
| CN | 114633758 | A | 17 June 2022 | (Family: none) | | | |
| JP | 2022-183594 | A | 13 December 2022 | WO | 2022/255006 | A1 | |
| | | | | entire text | | | |
| | | | | CN | 117377606 | A | |

Form PCT/ISA/210 (patent family annex) (July 2022)

**EP 4 696 579 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019177002 A